(19) Europäisches Patentamt / European Patent Office / Office européen des brevets

(11) **EP 3 394 681 B1**

(12) **EUROPÄISCHE PATENTSCHRIFT**

(45) Veröffentlichungstag und Bekanntmachung des Hinweises auf die Patenterteilung:
**08.01.2025 Patentblatt 2025/02**

(21) Anmeldenummer: **16810432.1**

(22) Anmeldetag: **19.12.2016**

(51) Internationale Patentklassifikation (IPC):
**G03H 1/20** *(2006.01)* **G03H 1/02** *(2006.01)*
**G03H 1/04** *(2006.01)* *G02B 6/34* *(2006.01)*

(52) Gemeinsame Patentklassifikation (CPC):
**G03H 1/0248; G03H 1/0408; G03H 1/202;**
G02B 6/34; G03H 2001/0415; G03H 2223/16;
G03H 2223/18; G03H 2223/25; G03H 2227/03;
G03H 2227/04; G03H 2250/35

(86) Internationale Anmeldenummer:
**PCT/EP2016/081766**

(87) Internationale Veröffentlichungsnummer:
**WO 2017/108704 (29.06.2017 Gazette 2017/26)**

(54) **VORRICHTUNG UND VERFAHREN ZUR HERSTELLUNG VON VOLUMENREFLEXIONSHOLOGRAMMEN MIT SUBSTRATGEFÜHRTEN REKONSTRUKTIONSSTRAHLEN**

DEVICE AND METHOD FOR THE PRODUCTION OF VOLUME REFLECTION HOLOGRAMS WITH SUBSTRATE-GUIDED RECONSTRUCTION BEAMS

DISPOSITIF ET PROCEDE DE FABRICATION D'HOLOGRAMMES VOLUMIQUES PAR REFLEXION A L'AIDE DE FAISCEAUX DE RECONSTRUCTION GUIDE PAR SUBSTRAT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2015 EP 15202173**

(43) Veröffentlichungstag der Anmeldung:
**31.10.2018 Patentblatt 2018/44**

(73) Patentinhaber: **Covestro Deutschland AG**
**51373 Leverkusen (DE)**

(72) Erfinder:
- **REWITZ, Christian**
  **50823 Köln (DE)**
- **HAGEN, Rainer**
  **51377 Leverkuse (DE)**
- **FÄCKE, Thomas**
  **51375 Leverkusen (DE)**
- **WALZE, Günther**
  **51377 Leverkusen (DE)**
- **BRUDER, Friedrich-Karl**
  **47802 Krefeld (DE)**

(74) Vertreter: **Levpat**
**c/o Covestro AG**
**Gebäude 4825**
**51365 Leverkusen (DE)**

(56) Entgegenhaltungen:
WO-A1-2008/100593    WO-A1-90/05317
JP-A- S60 122 983    US-A- 5 330 264
US-A1- 2006 232 838    US-A1- 2008 304 120

- OWEGA S ET AL: "Solid-state optical coupling for surface plasmon resonance sensors", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER BV, NL, vol. 114, no. 1, 30 March 2006 (2006-03-30), pages 212 - 217, XP027971403, ISSN: 0925-4005, [retrieved on 20060330]

EP 3 394 681 B1

**Beschreibung**

Die Erfindung betrifft eine Vorrichtung zum Herstellen von Volumenreflexionshologrammen mit substratgeführten Rekonstruktionsstrahlen, umfassend mindestens ein transparentes, flächiges Trägerelement mit einer ersten Flachseite und einer weiteren Flachseite, und mindestens ein an der ersten Flachseite des Trägerelements anordnenbares Masterelement. Darüber hinaus betrifft die Erfindung ein Verfahren zum Herstellen von Volumenreflexionshologrammen mit substratgeführten Rekonstruktionsstrahlen und ein Einkopplungselement für eine Vorrichtung zum Herstellen von Volumenreflexionshologrammen mit substratgeführten Rekonstruktionsstrahlen.

Volumenhologramme, die in der Literatur auch als dicke Hologramme beschrieben sind, werden in vielen optischen Anwendungen eingesetzt, wie Displayanwendungen. Laut Definition des Volumenhologramms ist dessen Dicke viel größer als die zur Aufzeichnung des Hologramms verwendete Lichtwellenlänge. Das Volumenhologramm ist ein Licht beugendes holographischoptisches Element (HOE) basierend auf einem lichtdurchlässigen Medium, das als Phasen- oder Absorptionsgitter in das Volumen der holographischen Aufzeichnungsschicht eingeschrieben wurde.

Bei Volumenhologrammen unterscheidet man grundsätzlich zwischen zwei Arten von Volumenhologrammen, den Transmissionsvolumenhologrammen und den Reflexionsvolumenhologrammen. Für diese Anmeldung sind insbesondere die Reflexionsvolumenhologramme relevant.

Typische Aufzeichnungsmedien für Volumenhologramme sind Metallhalogenidemulsionen, Dichromatgelatinen, Photopolymere und photochrome Materialen. Deren Funktionsweise, chemische Zusammensetzung und Anwendungen sind in der Literatur beschrieben ["Optical Holography", by P. Hariharan, Cambridge University Press (1996), ISBN 0 521 43348 7].

Aus dem Stand der Technik sind grundsätzlich Vorrichtungen bzw. Anlagen und Verfahren zur Herstellung von Reflexionshologrammen bekannt, wie aus dem oben genannten Dokument. So ist es bekannt, unter anderem einen Strahlteiler einzusetzen, um einen kollimierten Laserstrahl in zwei getrennte Objekt- und Referenzstrahlengänge zu teilen bzw. zu leiten. Es versteht sich, dass weitere optische Elemente, wie Linsen, Raumfilter etc., vorgesehen sein können, um die Teilstrahlen beispielsweise aufzuweiten, zu homogenisieren und/oder gewünschte Wellenfronten herzustellen.

Das zu holographierende Objekt, auch Masterelement genannt, wird von dem Objektstrahl beleuchtet und beugt Licht in Richtung des holographischen Aufzeichnungsmediums. Beispielsweise kann es sich bei dem holographischen Aufzeichnungsmedium um eine photographische Platte handeln. Diese ist in der Vorrichtung insbesondere an dem Ort positioniert, wo die beiden Teilstrahlen zur Interferenz gebracht werden bzw. die beiden Teilstrahlen werden am Ort der Platte zur Interferenz gebracht.

Im Falle anderer zu holographierender Objekte und je nach gewünschter geometrischer Funktion des herzustellenden Volumenhologramms (z.B. Rekonstruktionswinkel, Abstrahlcharakteristik) sowie je nach gewünschtem Rekonstruktions-Farbspektrum können die Apparaturen bzw. Vorrichtungen angepasst werden. So zeigt beispielsweise das Dokument US 2011/0058240 A1 einen komplexen Interferenzaufbau, bei dem mittels dreier Laserstrahlen unterschiedlicher Farbe Weißlicht-Volumenhologramme hergestellt werden können.

Bei anderen aus dem Stand der Technik bekannten Vorrichtung bzw. Apparaturen kann ein Einstrahlaufbau implementiert sein. Ein Einstrahlaufbau kann dann eingesetzt werden, wenn das Objekt bzw. Masterelement insbesondere ein Masterhologramm ist, von dem eine Kopie erzeugt werden soll. Das Dokument US 2007/024939 A beschreibt eine Vorrichtung in verschiedenen Ausführungsformen, bei der mittels einer Fördereinrichtung Hologrammkopien in semi- bis vollautomatischer Weise hergestellt werden können.

Einstrahlaufbauten zeichnen sich in der Regel dadurch aus, dass das Masterelement und das holographische Aufzeichnungsmedium in Kontakt gebracht werden. Das Masterelement kann aus einem Reflexionsvolumenhologramm gebildet sein. Das Masterelement kann insbesondere die Objektwelle bzw. den Objektstrahl erzeugen, so dass das ungebeugte und durch das Aufzeichnungsmedium transmittierte Laserlicht (Referenzstrahl) mit dem von dem Masterelement reflektiv gebeugten Lichtstrahl (Objektstrahl) interferiert. Hierdurch kann an dem Ort des holographischen Aufzeichnungsmediums eine Kopie des Masterhologramms erzeugt bzw. geschrieben werden.

Beispielsweise kann an einer Flachseite einer Glasplatte ein Masterelement und auf der anderen Flachseite das holographische Aufzeichnungsmedium angeordnet sein.

Darüber hinaus ist die Einkopplung von Licht in planare Lichtleitersubstrate und planare Wellenleitersubstrate über Verwendung von (optischen) Einkopplungselementen aus dem Stand der Technik WO1994/018603 A1 bekannt.

Substratgeführte Rekonstruktionsstrahlen sind charakteristisch für insbesondere kompakte optische Aufbauten in denen die Lichtquelle durch einen dünnen Wellenleiter oder eine Lichtführungsplatte einkoppelt und einem auf diesem Wellenleiter oder dieser Lichtführungsplatte positionierten Volumenhologramm ausgekoppelt wird. Dies eignet sich zum Beispiel für flache Beleuchtungskörper, Kunstholografie oder spezielle Beleuchtungseinrichtungen für elektronische Displays. Umgekehrt können solche Aufbauten auch zum Sammeln von Licht verwendet werden, wie sie zum Beispiel in neuen Solarzellen oder Kamerasystemen von Bedeutung sind. Gemein haben diese Aufbauten insbesondere, dass die Lichtstrahlgeometrie des substratgeführten Lichtes essentiell einer Planwelle ähnlich ist und der Objektstrahl sowohl ebenfalls substratführend oder aus dem Substrat herausführend (free-space Geometrie) konfiguriert sein kann. Der Objektstrahl kann einer komplexen Wellenfront entsprechen, wie sie zum Beispiel bei dreidimensionalen Bildern der Fall ist. Ebenfalls können auch andere Geometrien, wie die eines Diffusors oder einer sphärisch oder zylindrisch konvex oder konkaven Wellenfront, Verwendung finden.

Die Herstellung von Volumenreflexionshologrammen mit substratgeführten Rekonstruktionsstrahlen, d.h. kantenbeleuchtete Volumenhologramme, ist jedoch mit Problemen verbunden. Anwendungen von derartigen Hologrammen sind beispielsweise aus den Druckschriften US 4 643 515 A und US 4 790 613 A bekannt.

So wird zur Herstellung gemäß dem Stand der Technik ein Trägerelement an einer ersten Flachseite mit einem Masterelement versehen, während auf der anderen Flachseite des Trägerelements ein holographisches Aufzeichnungsmedium platziert wird. Um einen Lichtstrahl mit einer flachen Einfallsrichtung, die zur Herstellung eines Volumenreflexionshologramms mit substratgeführten Rekonstruktionsstrahlen erforderlich ist, in das holographische Aufzeichnungsmedium einzukoppeln, positioniert ein Benutzer ein Einkopplungselement manuell auf dem holographischen Aufzeichnungsmedium.

Insgesamt ist es erforderlich, dass zwischen Masterelement, Trägerelement, holographischem Aufzeichnungsmedium und dem Einkopplungselement ein ausreichender optischer Kontakt hergestellt wird. Problematisch hierbei ist es, einen guten optischen Kontakt zwischen einer (Einkoppel-)Flachseite des Einkopplungselements und dem holographischen Aufzeichnungsmedium sowie zwischen dem holographischen Aufzeichnungsmedium und dem Trägerelement zu erzielen. Während einer der optischen Kontakte durch zum Beispiel einen Laminierungsprozess in einfacher Weise hergestellt werden kann, gestaltet sich die Herstellung des anderen optischen Kontakts in der Praxis schwierig. Insbesondere ist es für einen fehlerfreien Herstellungsprozess wesentlich, dass ein blasenfreien Kontakt zwischen diesen Elementen herstellbar ist.

Für den Fall, dass das holographische Aufzeichnungsmedium auf dem Trägerelement bereitgestellt wird (der optische Kontakt zwischen Trägerelement und Aufzeichnungsmedium also hergestellt ist), ist es zur Herstellung eines ausreichenden optischen Kontakts zwischen Einkopplungselement und Aufzeichnungsmedium aus dem Stand der Technik bekannt, so genannte Index-Match-Flüssigkeiten zu verwenden. Diese werden zwischen das Einkopplungselement und das holographische Aufzeichnungsmedium aufgebracht. Indem dann das Einkopplungselement anschließend aufgepresst wird, kann ein ausreichender blasenfreier optischer Kontakt zwischen Einkopplungselement und Aufzeichnungsmedium hergestellt werden. Nach dem Schreibprozess ist es jedoch erforderlich, die Index-Match-Flüssigkeiten vollständig zu beseitigen. Nachteilig hieran ist daher, dass zum einen ein hoher Arbeitsschutz erfüllt werden muss und zum anderen eine automatische und insbesondere effiziente Entfernung der Index-Match-Flüssigkeit sehr aufwändig ist. Auch ist die chemische Inkompatibilität der Index-Match-Flüssigkeit zum holografischen Aufzeichnungsmedium problematisch. Die US 5 330 264 A zeigt beispielsweise in einem verwandten Prozess, dass die Menge der Index-Match-Flüssigkeit (in diesem Fall Silikonöl) zur Kontaktierung zweier starrer Flächen stark reduziert werden kann, um die Wartezeit in einem Massenproduktionsprozess zu verkürzen.

Die WO2008/100593 wiederum beschreibt diese Kontaktierung mithilfe von Index-Match Flüssigkeiten wie Xylol, Decalin, Wasser und geschmolzenen Gelatine-Mischungen. Die Gelatine-Mischungen werden heiß und flüssig aufgetragen, härten dann bei Raumtemperatur aus, und können nach der holografischen Belichtung abgezogen werden. Nachteilig hierbei ist die flüssige Auftragung, die anzunehmende lange Aushärtezeit, sowie die Einschränkung der nur einmaligen Verwendung.

Daher liegt der Erfindung die Aufgabe zugrunde, eine Vorrichtung und ein Verfahren zur Herstellung von Volumenreflexionshologrammen mit substratgeführten Rekonstruktionsstrahlen in industriellem Maßstab bereitzustellen, welche/s in einfacher Weise, insbesondere ohne Verwendung von Index-Match-Flüssigkeiten eine effiziente Herstellung von Volumenreflexionshologrammen mit substratgeführten Rekonstruktionsstrahlen, insbesondere ein massenherstellungstaugliches Verfahren mit Rolle-zu-Rolle Handhabung des Aufzeichnungsmediums, ermöglicht.

Die Aufgabe wird gemäß einem ersten Aspekt der Erfindung bei einer Vorrichtung gemäß dem vorliegenden Patentanspruch 1 gelöst. Die Vorrichtung zum Herstellen von Volumenreflexionshologrammen mit substratgeführten Rekonstruktionsstrahlen umfasst mindestens ein transparentes, flächiges Trägerelement mit einer ersten Flachseite und einer weiteren Flachseite. Die Vorrichtung umfasst mindestens ein an der ersten Flachseite des Trägerelements anordnenbares Masterelement. Die Vorrichtung umfasst mindestens ein optisches Einkopplungselement eingerichtet zum optischen Einkoppeln eines Lichtstrahls.

Die Vorrichtung umfasst mindestens einen Kopplungsabschnitt eingerichtet zum mechanischen Herstellen eines optischen Kontakts zwischen dem Einkopplungselement, und mindestens einem auf der weiteren Flachseite des Trägerelements bereitstellbaren holographischen Aufzeichnungsmedium oder eingerichtet zum mechanischen Herstellen eines optischen Kontakts zwischen der weiteren Flachseite des Trägerelements und mindestens einem auf einer Flachseite des optischen Einkopplungselements bereitstellbaren holographischen Aufzeichnungsmedium. Zumindest der Kopplungsabschnitt besteht aus einem Material mit einem Schubmodul zwischen 1000 Pa und 50 MPa, vorzugsweise zwischen 30000 Pa und 30 MPa, gebildet ist.

Erfindungsgemäß ist erkannt worden, dass ein guter, insbesondere blasenfreier optischer Kontakt zwischen einem Einkopplungselement (oder Trägerelement) und einem holographischen Aufzeichnungsmedium ohne die Ver-

EP 3 394 681 B1

wendung einer Index-Match-Flüssigkeit erreicht werden kann, indem ein Einkopplungselement oder das Trägerelement zumindest einen Kopplungsabschnitt aus einem Material mit einem Schubmodul zwischen 1000 Pa und 50 MPa, vorzugsweise zwischen 30000 Pa und 30 MPa, umfasst. Aufgrund dieser speziellen mechanischen Eigenschaften des Kopplungsabschnitts kann insbesondere eine Flachseite des Kopplungsabschnitts durch mechanische Zustellung in einen optischen Kontakt mit einer Flachseite des holographischen Aufzeichnungsmediums gebracht und gleichzeitig sichergestellt werden, dass die Kopplung für das Aufzeichnungsmedium, bevorzugt auch für den Kopplungsabschnitt, rückstands- und zerstörungsfrei ebenfalls durch mechanische Bewegung wieder gelöst werden kann. Da die so bewirkte mechanische Kopplung durch anschließende mechanische Entkopplung demnach reversibel ausgestaltet ist, eignet sich die Vorrichtung für eine Anwendung in der Herstellung von Volumenreflexionshologrammen mit substratgeführten Rekonstruktionsstrahlen im industriellen Maßstab und kommt ohne Einsatz von Index-Match-Flüssigkeiten aus.

Die vorliegende Vorrichtung ist, wie erwähnt, insbesondere zur Herstellung eines speziellen Typs von Hologrammen, insbesondere von einem substratgeführten Volumenreflexionshologramm, konfiguriert. Ein Volumenreflexionshologramm mit substratgeführten Rekonstruktionsstrahlen zeichnet sich vorliegend dadurch aus, dass der Rekonstruktionsstrahl, also der Strahl, der die Beugungsbedingung erfüllt, sehr flach auf das Hologramm fällt, wie es bei der Kantenbeleuchtung, bzw. Edge-Lit Geometrie der Fall ist.

Aufgrund dieser speziellen Geometrie ist das so hergestellte Hologramm bzw. holographischoptische Element (HOE) für Anwendungen mit substratgeführten Rekonstruktionsstrahlen geeignet. Dabei ist das flächige Hologramm optisch mit einem Wellenleiter- bzw. Lichtleitersubstrat gekoppelt, in welchem sich Rekonstruktionsstrahlen ausbreiten. Das geschieht z.B. über Totale Interne Reflexion (TIR) oder in direkter Beleuchtung durch das Wellenleiter- bzw. Lichtleitersubstrat.

Die erfindungsgemäße Vorrichtung weist zumindest ein Trägerelement auf. Das Trägerelement weist eine erste und eine weitere Flachseite auf. Ferner ist das Trägerelement aus einem transparenten Material, wie Glas, gebildet. Unter transparent ist insbesondere zu verstehen, dass ein Großteil (z.B. > 90 %) des von einer eingesetzten Lichtquelle abgestrahlten Lichts, wie ein Laserstrahl, durch das Trägerelemente durchdringt.

Das Trägerelement kann als planare Platte mit vorzugsweise zwei planaren Flachseiten oder als gekrümmte Platte mit einer vorgebbaren Krümmung gebildet sein. Die Form der Flachseite kann insbesondere zu der Form des herzustellenden Volumenreflexionshologramms korrespondieren bzw. entsprechen, welche von einer Anwendung gefordert wird. Bevorzugt kann das Trägerelement, wie eine Glasplatte, als Laminierungssmedium für das holographische Aufzeichnungsmedium dienen. Alternativ kann das optische Einkopplungselement als Laminierungssmedium für das holographische Aufzeichnungsmedium dienen. Vorzugsweise kann das Trägerelement als optisch klare und essentiell plane Schutzschicht gebildet sein und insbesondere aus dünnem Glas oder aus organischem und/oder anorganischem und/oder hybrid-Schutzlack oder als thermoplastische Schicht oder Kombinationen daraus gebildet sein. Ferner kann das Trägerelement ausreichend mechanisch stabil gegenüber dem Druck einer Anpresswalze und den Zugkräften, die bei der Delamination auftreten, ausgebildet sein.

An der ersten Flachseite des Trägerelements kann das Masterelement angeordnet werden. Insbesondere steht das Masterelement mit dem Trägerelement in einem optischen Kontakt.

Beispielsweise kann es auflaminiert sein und/oder zwischen dem Trägerelement und einem weiteren, bevorzugt sich darunter befindenden Trägerelement gehalten werden. Das Masterelement, wie ein Mastervolumenhologramm, umfasst die Informationen, die in das holographische Aufzeichnungsmedium geschrieben werden sollen. Mit anderen Worten kann das Mastervolumenhologramm, insbesondere ein Mastervolumenreflexionshologramm, kopiert werden. Das Mastervolumenhologramm kann verschiedene substratgeführte oder free-space Wellenfronten als Objektstrahl aus dem substratgeführten Rekonstruktionsstrahl erzeugen. Diese Wellenfronten können eine Planwelle, eine zylindrische oder sphärische Welle (die auch multifokal sein können), die Bildwelle eines Objektes, zum Beispiel eines Diffusors, sein. Auch mehrere komplexe Kombinationen dieser verschiedenen Wellenfronten können Verwendung finden.

Auf der weiteren Flachseite, die insbesondere der ersten Flachseite des Trägerelements gegenüberliegt, kann das insbesondere flächige holographische Aufzeichnungsmedium beispielsweise in Form eines Films bereitgestellt werden. Alternativ kann das holographische Aufzeichnungsmedium auf einer Flachseite des Einkopplungselements bereitgestellt werden. Der Abstand zwischen dem Masterelement und dem holographischen Aufzeichnungsmedium, also insbesondere die Dicke des Trägerelements, ist vorzugsweise zumindest kleiner als die Kohärenzlänge der Laserquelle. Der Abstand zwischen dem Masterelement und dem holografischen Auszeichnungsmedium ist vorzugsweise möglichst gering. Bevorzugt kann der Abstand weniger als 5 mm, besonders bevorzugt weniger als 1 mm sein. Das Trägerelement kann als Lackschicht ausgebildet sein. Unter dem Masterelement kann ein weiteres Trägerelement, beispielsweise in Form einer Glasplatte vorgesehen sein. Ein beispielhafter Aufbau umfasst als Trägerelement eine Lackschicht, gefolgt von dem Masterelement, gefolgt von einer optisch klaren Klebschicht (OCA), gefolgt von einer Glasschicht.

Um einen Lichtstrahl mit einem gewünschten, vorgebbaren flachen Winkel einkoppeln zu können, umfasst die Vorrichtung ein (optisches) Einkopplungselement. Das Einkopplungselement kann ein refraktives optisches Element, besonders bevorzugt ein optisches Prisma, sein.

Das Einkopplungselement (oder das Trägerelement) umfasst einen Kopplungsabschnitt, welcher zumindest die Flachseite des Einkopplungselements (oder des Trägerelements) bildet, die in (direktem) Kontakt mit dem holographischen Aufzeichnungsmedium in einer Kopplungsstellung ist.

Erfindungsgemäß ist erkannt worden, dass für einen guten optischen Kontakt zumindest der Kopplungsabschnitt aus einem weichen, zwecks anschließender Ablösung, d.h. Entkopplung, nicht permanent haftenden optischen Material gebildet sein sollte. Insbesondere kann ein optisch klares Material eingesetzt werden. Erfindungsgemäß ist vorgesehen, dass zumindest der Kopplungsabschnitt aus einem Material mit einem Schubmodul zwischen 1000 Pa und 50 MPa, vorzugsweise zwischen 30000 Pa und 30 MPa, gebildet ist.

Durch die erfindungsgemäße Vorrichtung kann in einfacher Weise eine blasenfreie optische Verbindung zwischen Einkopplungselement und Kopiermedium bzw. holographischen Aufzeichnungsmedium (oder zwischen Trägerelement und Kopiermedium) auf einer Fläche, die die Beleuchtungsfläche während der Hologrammaufzeichnung einschließt, hergestellt werden. Die erfindungsgemäße Vorrichtung ermöglicht ein optisches Koppeln großer, auch nicht perfekt ebener Flächen, ohne zu hohen Druck auf das Kopiermedium ausüben zu müssen. Beispielsweise kann ein Druck von 2 bis 5 bar ausgeübt werden. Im Unterschied zum Stand der Technik erlaubt der Kopplungsabschnitt insbesondere ein reversibles Koppeln und/oder Entkoppeln. Dies ist Voraussetzung für eine Anwendung im industriellen Maßstab, die auf einen hohen Durchsatz abzielt. Das holographische Aufzeichnungsmedium wird insbesondere weder physikalisch noch chemisch geschädigt. Die Herstellung eines Volumenhologramms ist zeiteffizienter, da keine Reinigungsschritte erforderlich sind, wie sie bei Verwendung von Index-Match-Flüssigkeiten notwendig wären. Die Vorrichtung ist einfach und mit geringem Aufwand zu warten, da insbesondere auf flüssige Stoffe verzichtet werden kann. Es werden außerdem nur geringe Anpressdrücke benötigt.

Gemäß einer ersten Ausführungsform der erfindungsgemäßen Vorrichtung können das Einkopplungselement und der Kopplungsabschnitt (oder das Trägerelement und der Kopplungsabschnitt) homogen aus einem Material mit einem Schubmodul zwischen 1000 Pa und 50 MPa, vorzugsweise zwischen 30000 Pa und 30 MPa, gebildet sein. Mit anderen Worten können das Einkopplungselement und der Kopplungsabschnitt (oder das Trägerelement und der Kopplungsabschnitt) als integrales Bauteil gefertigt sein, so dass keine erkennbaren separaten Schichten an oder in dem Bauteil vorhanden sind. In einer alternativen oder zusätzlichen Ausgestaltung kann das Einkopplungselement (oder das Trägerelement) als Kopplungsabschnitt eine Beschichtung aus einem Material mit einem Schubmodul zwischen 1000 Pa und 50 MPa, vorzugsweise zwischen 30000 Pa und 30 MPa, aufweisen. Beispielsweise kann das Einkopplungselement (oder Trägerelement) zur Bildung des Kopplungsabschnitts mit einem entsprechenden Lack beschichtet sein. Auch kann eine Beschichtung durch einen (Form-) Gießprozess oder Spritzgussprozess aufgebracht sein. Die Beschichtung kann insbesondere eine planare oder ballige Beschichtung sein. Im Falle einer balligen Beschichtung ist eine erleichterte Kontaktierung möglich. Gleiches gilt für die Entkopplung/Ablösung des Kopplungsabschnitts vom holografischen Aufzeichnungsmedium. Die ballige Form kann auch vorgesehen sein, wenn, wie oben ausgeführt, das Einkopplungselement und der Kopplungsabschnitt (oder das Trägerelement und der Kopplungsabschnitt) homogen aus einem Material gebildet sind. Die Beschichtung bzw. Schicht kann eine Dicke von mindestens 1 $\mu$m, bevorzugt von mindestens 50 $\mu$m und besonders bevorzugt von mehr als 100 $\mu$m aufweisen.

In einer noch weiteren erfindungsgemäßen Ausführungsform können das Einkopplungselement (oder das Trägerelement) und der Kopplungsabschnitt als separate Elemente gebildet sein. Ein optischer Grundkörper und ein transportabler Film können das Einkopplungselement (oder das Trägerelement) bilden. Der Kopplungsabschnitt kann insbesondere als transportabler Film aus einem Material mit einem Schubmodul zwischen 1000 Pa und 50 MPa, vorzugsweise zwischen 30000 Pa und 30 MPa, gebildet sein. Beispielsweise kann der Kopplungsabschnitt ein Film sein, der über eine Fördereinrichtung umfassend beispielsweise mindestens ein Umrollelement transportiert werden kann. Der Vorteil besteht darin, dass verbrauchtes Filmmaterial (automatisiert) nachgeliefert werden kann.

Um eine möglichst effiziente und gleichbleibende optische Kopplung und Entkopplung zwischen dem Kopplungsabschnitt und dem holographischen Aufzeichnungsmedium zu bewirken, kann gemäß einer weiteren Ausführungsform mindestens ein mit dem Einkopplungselement (oder Trägerelement) zumindest mechanisch verbindbares Handhabungselement eingerichtet zum Bewegen des Einkopplungselements (oder Trägerelements) vorgesehen sein. Das Handhabungselement kann beispielsweise eine mechanische Vorrichtung zum Heben und/oder Senken des Einkopplungselements oder ein Roboterarm sein, um das Einkopplungselement zu verfahren. Alternativ kann das Handhabungselement beispielsweise eine mechanische Vorrichtung zum Heben und/oder Senken des Trägerelements oder ein Roboterarm sein, um das Trägerelement zu verfahren. Alternativ können auch das Einkopplungselement und das Trägerelement bewegt werden.

Vorzugsweise kann mindestens eine Steuerung zum Steuern des Handhabungselements vorgesehen sein. Die Steuerung kann eingerichtet sein, das Handhabungselement derart anzusteuern, dass in einem Kopplungsschritt das Einkopplungselement (oder Trägerelement) von einer Ausgangsstellung in eine Kopplungsstellung durch das Handhabungselement bewegt werden kann. Alternativ oder zusätzlich kann die Steuerung eingerichtet sein, das Handhabungselement derart anzusteuern, dass in einem Entkopplungsschritt das Einkopplungselement (oder das Trägerelement) durch das Handhabungselement von der Kopplungsstellung in die Ausgangsstellung bewegt werden kann. Dies erfolgt derart, dass beim Entkoppeln keine Beschädigung des Aufzeichnungsmediums und/oder des Kopplungsabschnittes erfolgt. In insbesondere automatisierter Weise kann in einem Kopplungsschritt eine optische Kopplung und/oder in einem Entkopplungsschritt eine Entkopplung bewirkt werden.

Grundsätzlich kann das Einkopplungselement (oder das Trägerelement) in beliebiger Weise auf das holographische Aufzeichnungsmedium aufgesetzt bzw. mit diesem optisch gekoppelt werden, so lange die Kopplungsfläche von dem erfindungsgemäß gebildeten Kopplungsabschnitt gebildet wird. In einer Ausführungsform kann die zu koppelnde Fläche des Kopplungsabschnitts planparallel zum holographischen Aufzeichnungsmedium ausgerichtet und angenähert werden.

In einer weiteren bevorzugten Ausführungsform kann die Steuerung eingerichtet sein, das Handhabungselement derart anzusteuern, dass in einem ersten Teilschritt des Kopplungsschritts das Einkopplungselement (oder das Trägerelement) von der Ausgangsstellung in eine Zwischenstellung bewegt wird. In der Zwischenstellung kann zumindest eine Kante des Kopplungsabschnitts das holographische Aufzeichnungsmedium kontaktieren. Vorzugsweise kann nur eine Kante des Kopplungsabschnitts das holographische Aufzeichnungsmedium in der Zwischenstellung kontaktieren. Es ist besonders bevorzugt zur besonders sicheren Erzielung eines blasenfreien Kontakts nicht zeitgleich die gesamte Flachseite des Kopplungsabschnitts auf das holographische Aufzeichnungsmedium aufzusetzen, um insbesondere bei großen zu koppelnden Flächen einen Lufteinschluss zu verhindern.

Besonders bevorzugt kann die Steuerung eingerichtet sein, das Handhabungselement derart anzusteuern, dass in einem weiteren Teilschritt des Kopplungsschritts das Einkopplungselement (oder das Trägerelement) von der Zwischenstellung durch eine Kippbewegung in die Kopplungsstellung bewegt wird. Insbesondere kann in der Zwischenstellung zwischen einer Flachseite des Kopplungsabschnitts und einer Flachseite des holographischen Aufzeichnungsmediums ein vorgebbarer Winkel $\alpha$ liegen. Durch eine Kippbewegung kann das Einkopplungselement (oder das Trägerelement) insbesondere solange bewegt bzw. verfahren werden, bis der Winkel $\alpha$ im Wesentlichen 0° beträgt. Der Winkel $\alpha$ kann also kontinuierlich durch die Kippbewegung verringert werden. Die Kippbewegung ermöglicht unerwünschter Luft in einfacher Weise zu entweichen, so dass in sicherer Weise auch große Flächen in hoher Güte optisch gekoppelt werden können.

Das Material des Kopplungsabschnitts mit den speziellen mechanischen Eigenschaften ermöglicht es insbesondere, Unebenheiten auszugleichen und Lufteinschlüsse zu unterbinden.

In einer alternativen bevorzugten Ausführungsform kann die Steuerung eingerichtet sein, das Handhabungselement derart anzusteuern, dass in einem weiteren Teilschritt des Kopplungsschritts das Einkopplungselement (oder das Trägerelement) von der Zwischenstellung durch eine translatorische Bewegung in die Kopplungsstellung bewegt werden kann. Vorzugsweise kann in der Zwischenstellung zwischen einer Flachseite des Kopplungsabschnitts und einer Flachseite des holographischen Aufzeichnungsmediums ein Winkel $\beta$ liegen. Der Winkel $\beta$ kann die Bedingung $\beta < \arctan(d/1)$ erfüllen, wobei d die Schichtdicke des Kopplungsabschnitts in einem nicht komprimierten Zustand des Einkopplungselements und I die Länge des Kopplungsabschnitts, insbesondere die Länge zwischen zwei gegenüberliegenden Kanten des Kopplungsabschnitts, ist. Hierbei kann eine der Kanten die Kante sein, die in dem Zwischenschritt das holographische Aufzeichnungsmedium kontaktiert. Der Kopplungsabschnitt kann unter einem konstanten Winkel $\beta$ angenähert werden. Die durch zunehmende Kompression entstehende, wachsende Koppelfläche ermöglicht es insbesondere, Lufteinschlüsse zu vermeiden. Zudem können Unebenheiten auf und zwischen Kopplungsabschnitt und Trägerelement (oder Einkopplungselement) bzw. dem darauf angeordneten holographischen Aufzeichnungsmedium ausgeglichen werden. In einem gekoppelten Zustand kann der Kopplungsabschnitt an einer Seite der Koppelfläche nahezu völlig komprimiert sein, während er an der anderen Seite eine geringe Kompression erfährt.

Die beiden Teilschritte eines Kopplungsschritts können vorzugsweise in einer kontinuierlichen Bewegung durchgeführt werden.

Vorzugsweise kann in der Kopplungsstellung das Handhabungselement derart verfahren werden, dass der Kopplungsabschnitt kraftfrei gehalten wird, um insbesondere eine Deformation des Materials des Kopplungsabschnitts zu minimieren.

Darüber hinaus kann das Masterelement eingerichtet sein, einen auftreffenden Lichtstrahl, insbesondere Laserstrahl, zumindest teilweise reflektiv zu beugen. Das Masterelement kann ein Volumenhologramm, ein Oberflächenhologramm, bevorzugt ein mit hochbrechendem Lack versiegeltes Oberflächenhologramm oder jede andere diffraktiv wirkende Schicht, sein. Ein Reflexionsvolumenhologramm ist bevorzugt. Beispielsweise kann das Masterelement zwischen zwei Glasplatten eingebettet sein. Ein auf einer Flachseite des Einkopplungselements auftreffender, insbesondere zur Rekonstruktion des Masterelements geeigneter Laserstrahl kann das Einkopplungselement und das holographische Aufzeichnungsmedium sowie das Trägerelement durchdringen (Referenzstrahl). Der Laserstrahl kann auf das Masterelement treffen, das einen Objektstrahl in das Aufzeichnungsmedium zurückwirft. Durch Interferenz der beiden Teilstrahlen (Objekt- und Referenzstrahl) kann eine volumenholographische Kopie des Masterelements im Aufzeichnungsmedium erzeugt werden.

Das herzustellende Volumenreflexionshologramm kann auch als dickes Hologramm bezeichnet werden. Ein Volumenreflexionshologramm kann eine Dicke $d > g^2/\lambda$ aufweisen, wobei g der Abstand der Gitterebenen, d.h. der geometrische Abstand zweier benachbarter Maxima der Gittermodulation, und $\lambda$ die Wellenlänge eines Lichtstrahls ist.

Das Masterhologramm kann vorzugsweise ebenfalls ein Volumenhologramm mit einer Dicke $d > g^2/\lambda$ sein.

Grundsätzlich kann das holographische Aufzeichnungsmedium aus unterschiedlichen Materialien gebildet sein. Vorzugsweise kann das holographische Aufzeichnungsmedium aus einem Material ausgewählt aus der Gruppe umfassend photoresistive Materialien, Photopolymere, ein (feinkörniger) Silberhalogenidfilm, Dichromatgelatine, photochrome Materialien oder photorefraktive Materialien gebildet sein. Hierbei sind Photopolymere, Silberhalogenidphotofilm und Dichromatgelatine als Material besonders bevorzugt.

Für ein besonders effizientes Herstellen von Hologrammen kann gemäß einer weiteren Ausführungsform eine Fördereinrichtung eingerichtet zum Transportieren des holographischen Aufzeichnungsmediums vorgesehen sein. Die Fördereinrichtung kann mindestens eine Umlenkrolle oder dergleichen zum Fördern bzw. Transportieren des vorzugsweise als Film gebildeten holographischen Aufzeichnungsmediums umfassen. Insbesondere kann nach dem Beschreiben eines Abschnitts des holographischen Aufzeichnungsmediums der beschriebene Abschnitt ab- und ein noch unbeschriebener Abschnitt des holographischen Aufzeichnungsmediums hintransportiert werden. Insbesondere kann die Fördereinrichtung derart gesteuert (beispielsweise von der oben genannten Steuerung) werden, dass der Film bewegt bzw. transportiert werden kann, während das Einkopplungselement (oder das Trägerelement) das holographische Aufzeichnungsmedium nicht kontaktiert. Die Fördereinrichtung bzw. Transporteinrichtung kann eine Laminations-/ Delaminationseinheit umfassen, um beispielsweise das holographische Aufzeichnungsmedium auf dem Trägerelement oder dem Einkopplungselement zu laminieren. Eine insbesondere vollautomatisch betreibbare Vorrichtung kann bereitgestellt werden.

In einer besonders bevorzugten Ausführungsform kann das holographische Aufzeichnungsmedium eine lichtempfindliche Aufzeichnungsschicht und ein optisch klares Substrat umfassen. Bevorzugt kann die Transporteinheit eine Umrollanlage in einem Dunkelraum umfassen, die gewährleistet, dass das holographische Aufzeichnungsmedium mit den notwendigen Vorlaufgeschwindigkeiten und mit den nötigen Folienwicklungen, sowie den erlaubten Wickelradien und Zugspannungen transportiert werden kann.

Bevorzugt kann zumindest der Kopplungsabschnitt, vorzugsweise das gesamte Einkopplungselement, aus einem transparenten, nicht streuenden Material gebildet sein. Insbesondere kann ein Material verwendet werden, das keine Doppelbrechung aufweist. Der optische Parameter Haze kann zumindest kleiner als 1 % sein. Der Transmissionswert kann zumindest größer als 70 %, vorzugsweise größer als 85 % sein, bezogen auf das verwendete Laserlicht.

Ferner kann gemäß einer anderen Ausführungsform der erfindungsgemäßen Vorrichtung zumindest der Kopplungsabschnitt aus einem Material ausgewählt aus der Gruppe umfassend Polyurethan, Silikon, Kautschuk, Polyvinylbutyral, Polyvinylacetat, Polyvinylchlorid, Polyacrylat und/oder Epoxyharz gebildet sein.

Besonders geeignete Polyurethane sind Polyurethane, die essentiell frei von Hardsegmenten sind. Bevorzugt sind insbesondere Polyurethane mit aliphatischen Isocyanatbausteinen auf Basis von Pentamethylendiisocyanat, Hexamethylendiisocyanat, Isophorondiisocyanat und H12-Methylendiisocyanat, die mit Polyolen, vorzugsweise Diolen umgesetzt werden. Bevorzugte Diole umfassen aliphatische Polyester, Polyether auf Ethylenglycol, Propylenglycol oder Polytetrahydrofuran sowie Blockcopolymere mit Polyester und Polyethersegmenten.

Besonders geeignete Silicone sind Silicone auf Basis von Polydimethylsiloxanen (PDMS), Polydiphenylsiloxanen oder auch gemischten Polysiloxanen mit der Wiederholeinheit $(O\text{-}SiR1R2)_n$ mit R1,R2 = Methyl oder Phenyl. Bevorzugt sind Systeme, die eine Hydrosilylierung als Vernetzungsreaktion nutzen (z.B. eines Polydimethylsiloxans mit einer endständigen C=C Doppelbindung, dass mit einem silanfunktionellen Polydimethylsiloxan reagiert). Geeignete Katalysatoren sind dabei Platinverbindungen.

Thermoplastische Harze, wie Polymethylmethacrylat, Polyvinylbutyral, Polyvinylchlorid oder Polyvinylacetat können mit Weichmachern ebenfalls verwendet werden. Geeignete Weichmacher sind Verbindungen, wie Ester, Ether, Glycole, Glycolether.

Polyacrylate mit inneren Weichmachern, z.B. die Polyacrylate von längerkettigen Acrylsäureestern, wie z.B. Butylacrylat, Hexylacrylat, Isooctylacrylat oder Mischungen hiervon, erlauben die Herstellung erfindungsgemäßer Materialien.

Epoxyharze umfassend aliphatische Glycidylether und Glycidylester, die mit aliphatischen Amine und Carbonsäuren vernetzt werden können, eignen sich ebenfalls. Geeignete Amine, sind z.B. Etheramine (z.B. Jeffamine der Fa. Huntsman, Aspartate wie Desmophen NH 1220 der Fa. Covesto)

Bei einer weiteren Ausführungsform der Vorrichtung kann mindestens eine Laserquelle vorgesehen sein. Die Laserquelle bzw. Lasereinheit kann eingerichtet sein, das holographische Aufzeichnungsmedium statisch oder mit einem scannenden Laserstrahl zu belichten. Bei einem scannenden Verfahren kann das Masterelement von einer beweglichen Laserlichtlinie abgetastet werden. Bei einem statischen Belichtungsverfahren kann das Masterelement in seiner ganzen Fläche statisch belichtet werden. Die Belichtung kann mit Dauerstrichlasern (CW) oder mit gepulsten Kurzzeitlasern erfolgen. Ferner kann die Belichtung mit einem oder mehreren Laserstrahlen unterschiedlicher Wellenformen, unterschiedlicher Wellenlängen und/oder unterschiedlicher Intensitätsverteilungen erfolgen. Es versteht sich, dass mindestens ein optisches Element zur Strahlformung und/oder -führung vorgesehen sein kann.

Ferner kann vorgesehen sein, dass das Trägerelement und/oder das holographische Aufzeichnungsmedium mit einer Absorberfolie versehen werden kann. Die Absorberfolie kann das Intensitätsverhältnis zwischen Referenzstrahl und Objektstrahl, dem sog. Strahlenverhältnis im Aufzeichnungsmedium, gezielt verändern, um z.B. die zeitliche Ausbildung des Hologramms und/oder seine Eigenschaften zu beeinflussen.

Ein weiterer Aspekt der Erfindung ist ein Verfahren zum Herstellen von Volumenreflexionshologrammen mit substratgeführten Rekonstruktionsstrahlen, umfassend:

- Bereitstellen von mindestens einem transparenten, flächigen Trägerelement mit einer ersten Flachseite und einer weiteren Flachseite , wobei an der ersten Flachseite des Trägerelements ein Masterelement angeordnet wird,
- Bereitstellen von mindestens einem optischen Einkopplungselement mit einer Flachseite,
- Bereitstellen von einem holographischen Aufzeichnungsmedium auf der weiteren Flachseite des Trägerelements oder der Flachseite des optischen Einkopplungselements (,
- optisches Koppeln des holographischen Aufzeichnungsmediums mit einer Flachseite eines Kopplungsabschnitts in einem Kopplungsschritt derart, dass ein Lichtstrahl über das Einkopplungselement in das holographische Aufzeichnungsmedium eingekoppelt und von dem Masterelement reflektiert wird,
- wobei zumindest der Kopplungsabschnitt aus einem Material mit einem Schubmodul zwischen 1000 Pa und 50 MPa, vorzugsweise zwischen 30000 Pa und 30 MPa, gebildet ist.

Das Verfahren kann insbesondere von der zuvor beschriebenen Vorrichtung durchgeführt werden. Insbesondere kann durch das erfindungsgemäße Verfahren ein (nahezu) blasenfreier, optischer Kontakt hergestellt werden.

Ein noch weiterer Aspekt der Erfindung ist ein Einkopplungselement (oder Trägerelement) eingerichtet zum optischen Einkoppeln eines Lichtstrahls für eine Vorrichtung zum Herstellen von Volumenreflexionshologrammen mit substratgeführten Rekonstruktionsstrahlen nach einem der Ansprüche 1 bis 12. Das Einkopplungselement (oder Trägerelement) umfasst mindestens einen Kopplungsabschnitt eingerichtet zum Herstellen eines optischen Kontakts mit mindestens einem auf einer weiteren Flachseite eines Trägerelements (oder Einkopplungselements) bereitstellbaren holographischen Aufzeichnungsmedium. Zumindest der Kopplungsabschnitt ist aus einem Material mit einem Schubmodul zwischen 1000 Pa und 50 MPa, vorzugsweise zwischen 30000 Pa und 30 MPa, gebildet.

Das Einkopplungselement (oder Trägerelement) kann insbesondere in der oben beschriebenen Vorrichtung verwendet werden.

Es gibt nun eine Vielzahl von Möglichkeiten, die erfindungsgemäße Vorrichtung, das erfindungsgemäße Herstellungsverfahren und das erfindungsgemäße Einkopplungselement auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:

Fig. 1 eine schematische Ansicht eines Ausführungsbeispiels eines Einkopplungselements gemäß der vorliegenden Erfindung;

Fig. 2 eine schematische Ansicht eines Ausführungsbeispiels einer Vorrichtung gemäß der vorliegenden Erfindung;

Fig. 3 eine schematische Ansicht eines weiteren Ausführungsbeispiels einer Vorrichtung gemäß der vorliegenden Erfindung wobei sich das Einkopplungselement in einer Zwischenstellung befindet;

Fig. 4 eine schematische Ansicht eines weiteren Ausführungsbeispiels einer Vorrichtung gemäß der vorliegenden Erfindung;

Fig. 5 ein Diagramm eines Ausführungsbeispiels eines Verfahrens gemäß der vorliegenden Erfindung, und

Fig. 6 eine schematische Ansicht eines weiteren Ausführungsbeispiels einer Vorrichtung gemäß der vorliegenden Erfindung.

Nachfolgend werden gleiche Bezugszeichen für gleiche Elemente verwendet.

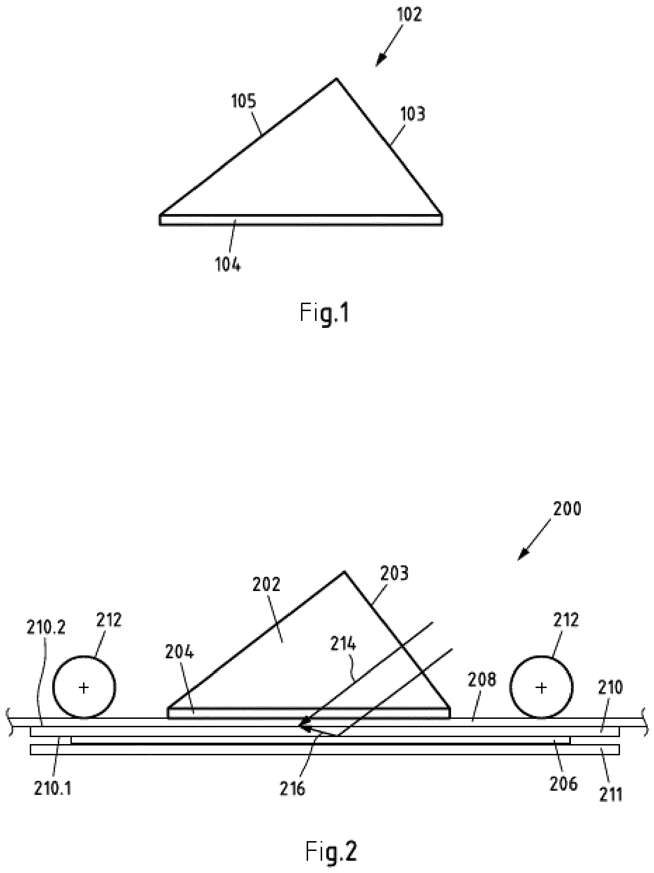

Die Figur 1 zeigt eine schematische Ansicht eines Ausführungsbeispiels eines optischen Einkopplungselements 102 gemäß der vorliegenden Erfindung. Das optische Einkopplungselement 102 weist vorliegend einen Kopplungsabschnitt 104 auf. Der Kopplungsabschnitt 104 ist dazu eingerichtet, den optischen Kontakt zwischen dem optischen Einkopplungselement 102 und einem holographischen Aufzeichnungsmedium herzustellen.

Bei dem optischen Einkopplungselement 102 kann es sich um ein Brechungsindex-angepasstes optisches Einkopplungselement 102 handeln. Dies bedeutet insbesondere, dass beim Übergang zum nächsten Medium kein oder ein möglichst geringer Brechungsindexsprung vorliegt. Beispielsweise kann das Einkopplungselement 102 ein Prisma sein. Über eine Seitenfläche 103, 105 des Einkopplungselements 102 kann ein Lichtstrahl, insbesondere ein Laserstrahl, eindringen und über den Kopplungsabschnitt 104 bzw. die Einkopplungsfläche 104 aus dem Einkopplungselement 102 austreten. Bevorzugt kann die Seitenfläche 103,105, in die der Lichtstrahl eindringt, antireflexbeschichtet sein. Bei der Verwendung von p-polarisiertem Licht kann die Fläche so gegenüber dem eindringenden Lichtstrahl ausgerichtet sein, dass der Lichtstrahl unter dem Brewster-Winkel einfällt. Die Seitenfläche kann plan sein oder auch eine geformte Oberfläche aufweisen, die insbesondere dazu dient, die Wellenfront der eindringenden Welle zu modifizieren.

Die andere Seitenfläche kann bevorzugt geschwärzt, mit einer absorbierenden Folie versehen und/oder so ausgerichtet sein, dass von der Einkopplungsfläche kommende Strahlen nicht zur Einkopplungsfläche zurück reflektiert werden können.

Es ist erkannt worden, dass für ein insbesondere blasenfreies Koppeln des Kopplungsabschnitts 104 mit einem holographischen Aufzeichnungsmedium und anschließendes problemloses, insbesondere für das Aufzeichnungsmedium schädigungsfreies Entkoppeln zumindest der Kopplungsabschnitt 104 aus einem ausreichend weichen bzw. visko-elastischen Material (ohne plastische Verformbarkeit) gebildet sein sollte. Bei dem Material kann es sich um ein Brechungsindex-angepasstes Material handeln. Zumindest der Kopplungsabschnitt 104 des Einkopplungselements 102 kann aus einem Material mit einem Schubmodul zwischen 30.000 Pa (N/m$^2$) und 30 MPa gebildet sein. Beispielsweise kann das Einkopplungselement 102 zur Herstellung des Kopplungsabschnitts 104 mit einem entsprechenden Material beschichtet sein. Beispielsweise kann zur Bildung des Kopplungsabschnitts 104 ein Lack mit einem entsprechenden Schubmodul auf dem Einkopplungselement 102 aufgebracht sein. Ebenfalls ist es möglich das Einkopplungselement 102 in einem Formgiessprozess mit dem Kopplungsabschnitt 104 zu versehen.

In einer alternativen Ausgestaltung kann vorgesehen sein, dass das Einkopplungselement 102 vollständig aus einem Material (oder mehreren Materialien) mit einem Schubmodul zwischen 30.000 Pa (N/m$^2$) und 30 MPa gebildet ist. In einem weiteren Ausführungsbeispiel kann das Einkopplungselement 102 aus zwei separaten Elementen, wie einem Grundkörper und dem Kopplungsabschnitt 104 gebildet sein. Der separate Kopplungsabschnitt 104 kann beispielsweise eine Platte oder ein Film sein, der aus einem Material mit einem Schubmodul zwischen 30.000 Pa (Nm/m$^2$) und 30 MPa gebildet ist. Vorzugsweise kann eine Fördereinrichtung vorgesehen sein, die mindestens ein Umrollelement umfassen kann. Die Fördereinrichtung kann dazu eingerichtet sein, den Film zu transportieren und den Film zwischen dem Grundkörper des Einkopplungselements und dem holographischen Aufzeichnungsmedium bereitzustellen. Beispielsweise kann durch einen entsprechenden mindestens zweiteiligen Aufbau eines Einkopplungselements 104 verbrauchtes oder beschädigtes Filmmaterial automatisiert durch neues Filmmaterial ersetzt werden.

In jedem Falle ist sichergestellt, dass nach dem blasenfreien Koppeln des Kopplungsabschnitts 104 mit dem holographischen Aufzeichnungsmedium ein problemloses Entkoppeln möglich ist, so dass dieser Prozess vielfach wiederholt werden kann, was Voraussetzung für eine Anwendung zur Herstellung von Volumenreflexionshologrammen mit substratgeführten Rekonstruktionsstrahlen im industriellen Maßstab ist.

Die Figur 2 zeigt eine schematische Ansicht eines Ausführungsbeispiels einer Vorrichtung 200 gemäß der vorliegenden Erfindung. Die schematisch dargestellte Vorrichtung 200 ist eingerichtet, Volumenreflexionshologramme mit substratgeführten Rekonstruktionsstrahlen herzustellen.

Die Vorrichtung 200 umfasst mindestens ein flächiges und transparentes Trägerelement 210. Beispielsweise kann vorliegend eine Glasplatte 210 als Trägerelement 210 vorgesehen sein. Das Trägerelement weist eine erste Flachseite 210.1 und eine der ersten Flachseite 210.1 insbesondere gegenüberliegende weitere Flachseite 210.2 auf. Auch wenn im vorliegenden Ausführungsbeispiel die weitere Flachseite 210.2 als planare Flachseite 210.2 gebildet ist, ist die Erfindung hierauf nicht beschränkt. Beispielsweise gibt es Anwendungen, in denen ein Volumenhologramm eine bestimmte Krümmung aufweist. Beispielsweise kann dies bei einem so genannten Headup-Display in einem Fahrzeug gewünscht sein. Vorzugsweise kann die Form der weiteren Flachseite 210.2 abhängig von der Anwendung des Volumenhologramms bzw. der gewünschten Krümmung des Volumenhologramms gebildet sein. Beispielweise kann die weitere Flachseite 210.2 gekrümmt sein bzw. einen bestimmten Krümmungsradius aufweisen.

Wie der Figur 2 ferner zu entnehmen ist, ist auf der ersten Flachseite 210.1 ein Masterelement 206 angeordnet. Insbesondere steht das Masterelement 206, wie ein Masterhologramm 206, in einem optischen Kontakt mit zumindest einem Teil der ersten Flachseite 210.1 des Trägerelements 210. Beispielsweise kann das Masterelement 206 auf der ersten Flachseite 210.1 des Trägerelements 210 auflaminiert sein. Das Masterelement 206 enthält insbesondere die Information, die in das holographische Aufzeichnungsmedium 208 geschrieben werden soll, um ein Volumenreflexionshologrammen mit substratgeführten Rekonstruktionsstrahlen herzustellen.

In einer alternativen Ausführungsform kann ein weiteres Trägerelement, wie eine weitere Glasplatte 211, vorgesehen sein. In diesem Fall kann das Masterelement 206 zwischen den beiden Trägerelementen angeordnet sein.

Wie bereits beschrieben wurde, kann ein zu beschreibendes holographisches Aufzeichnungsmedium 208 auf der weiteren Flachseite 210.2 des Trägerelements 210 bereitgestellt werden. In einem einfachen Fall kann dies durch eine manuelle Aktion eines Bedieners erfolgen. In der dargestellten bevorzugten Variante kann eine Fördereinrichtung 212 umfassend ein oder mehrere Umrollelement/e 212 vorgesehen sein, um das holographische Aufzeichnungsmedium 208 beispielsweise in Form eines Films zu transportieren und auf dem Trägerelement zu positionieren.

Dies erlaubt insbesondere eine industrielle Fertigung von Volumenreflexionshologrammen. Optional kann eine (nicht gezeigte) Laminations-/Delaminationseinheit vorgesehen sein.

Bevorzugt sind zudem holografische Aufzeichnungsmedien 208 umfassend ein thermoplastisches Substrat und eine holografische Aufzeichnungsschicht mit einem Schubmodul < 30 MPa. Das holographische Aufzeichnungsmedium 208 kann aus Metallhalogenidemulsionen, Dichromatgelatinen, Photopolymeren, photochromen Materialen oder ähnlichen Materialien gebildet sein. Besonders bevorzugt sind Photopolymere umfassend ein thermoplastisches Substrat und eine holografische Aufzeichnungsschicht mit einem Schubmodul < 0,7 MPa, wie in Druckschrift EP2317511 A1 beschrieben. Insbesondere bei dem in der EP2317511 A1 beschriebenen Photopolymer ist es allgemein bevorzugt, dass die holografische Aufzeichnungsschicht auf der dem Kopplungsabschnitt abgewandten Seite des Photopolymers angeordnet ist, derart, dass der Kopplungsabschnitt in der Kopplungsstellung stets im Kontakt zum thermoplastischen Substrat (und nicht zur holografischen Aufzeichnungsschicht) steht.

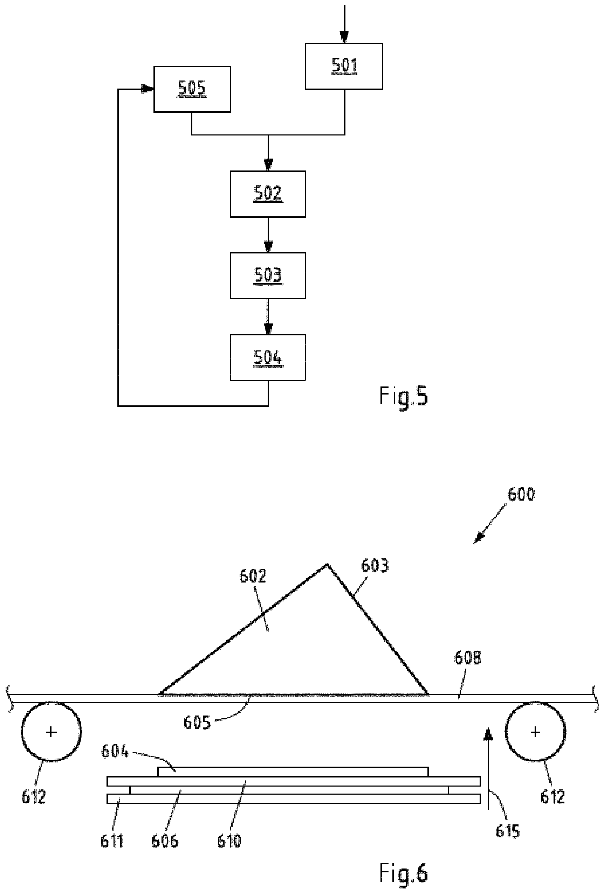

Darüber hinaus umfasst die Vorrichtung 200 ein Einkopplungselement 202 mit einem Kopplungsabschnitt 204, wobei zumindest der Kopplungsabschnitt 204 aus einem Material mit einem Schubmodul zwischen 30.000 Pa (N/m$^2$) und 30 MPa gebildet ist. Bevorzugt ist, dass bei Verwendung von holografischen Aufzeichnungsmedien 208 umfassend ein thermoplastisches Substrat und eine holografische Aufzeichnungsschicht, die Substratseite zum Kopplungsabschnitt 204 weist. Nicht dargestellt sind Mittel zum Verfahren des Einkopplungselements 202, um es beispielsweise auf das Aufzeichnungsmedium 208 mechanisch aufzusetzen, derart, dass ein (optimaler) optischer Kontakt zwischen dem Kopplungsabschnitt 204 und dem holographischen Aufzeichnungsmedium 208 hergestellt wird, welcher im Anschluss an den Schreibvorgang durch Entkopplung des Kopplungsabschnitt 204 von dem holographischen Aufzeichnungsmedium 208 einfach und schädigungsfrei wieder gelöst werden kann. Insbesondere kann zum Verfahren bzw. Bewegen des Einkopplungselements 202 ein mit dem Einkopplungselement 202 mechanisch verbundenes Handhabungselement und eine Steuerung eingerichtet zum Steuern des Handhabungselements vorgesehen sein. Alternativ kann auch das Einkopplungselement ruhen und das Trägerelement automatisch verfahren werden, wie nachfolgend beschrieben werden wird (Figur 6).

Nach Herstellung des insbesondere blasenfreien optischen Kontakts zwischen dem Kopplungsabschnitt 204, insbesondere der Flachseite des Kopplungsabschnitts 204, und dem holographischen Aufzeichnungsmedium 208 kann eine (nicht dargestellte) Lichtquelle, insbesondere ein Laser, aktiviert werden, um das Aufzeichnungsmedium zu beschreiben. Rein schematisch sind zur Veranschaulichung des Schreibprozesses zwei Strahlenwege 214 und 216 abgebildet.

Das Laserlicht 214 und 216 dringt in das optische Einkopplungselement 202 an einer Flachseite 203 ein. Über den Kopplungsabschnitt 204 durchdringt der Strahl 216 als Referenzstrahl 216 das holographische Aufzeichnungsmedium 208 und dann das Trägerelement 210. Anschließend wird der Strahl 216 vom Masterhologramm 206 zumindest zum Teil reflektiv gebeugt, so dass die gebeugte Teilwelle als Objektstrahl 216 geometrisch mit dem Referenzstrahl 214 im holographischen Aufzeichnungsmedium 208 interferiert und die gewünschte Information in das holographische Aufzeichnungsmedium 208 schreibt. Wie zu erkennen ist, kann der Einfallswinkel vorzugsweise ungleich dem Ausfallswinkel sein.

Ferner kann es am Masterhologramm 206 erforderlich sein, dass der ungebeugte Strahl (0. Ordnung, die auftreten kann, wenn die Beugungseffizienz nicht 100% ist) daran gehindert werden muss, durch Totalreflexion (TIR) an der Grenzfläche Masterhologramm-Luft in Richtung des Aufzeichnungsmediums 208 zurück zu reflektieren.

Dies kann bei einer bevorzugten Ausführungsform durch ein Brechungsindex angepasstes Material auf der Rückseite des Masterholgramms 206, also der Flachseite, die nicht die Trägerplatte kontaktiert, erfolgen, in das der ungebeugte Strahl eindringen kann. Z.B. kann eine absorbierende Folie, eine entsprechend dicke Trägerplatte 211, wie eine zweite Glasplatte 211, oder ein weiteres Prisma vorgesehen sein, welches die reflektierende Grenzfläche so weit nach unten versetzt und verkippt, dass der reflektierte Strahl nicht mehr das Aufzeichnungsmedium 208 (im relevanten Bereich) erreichen kann. Die Trägerplatte 211 kann zudem auch absorbierend für das verwendete Laserlicht (z.B. geschwärzt) ausgerüstet sein.

Die Belichtung kann statisch oder mit scannendem Laserstrahl erfolgen. Die Belichtung kann mit mindestens einem Dauerstrichlaser (CW) und/oder mit mindestens einem gepulsten Kurzzeitlaser erfolgen. Die Belichtung kann (je nach Aufgabenstellung) mit einem oder mehreren Laserstrahlen unterschiedlicher Wellenformen, unterschiedlicher Wellenlängen und unterschiedlicher Intensitätsverteilungen erfolgen.

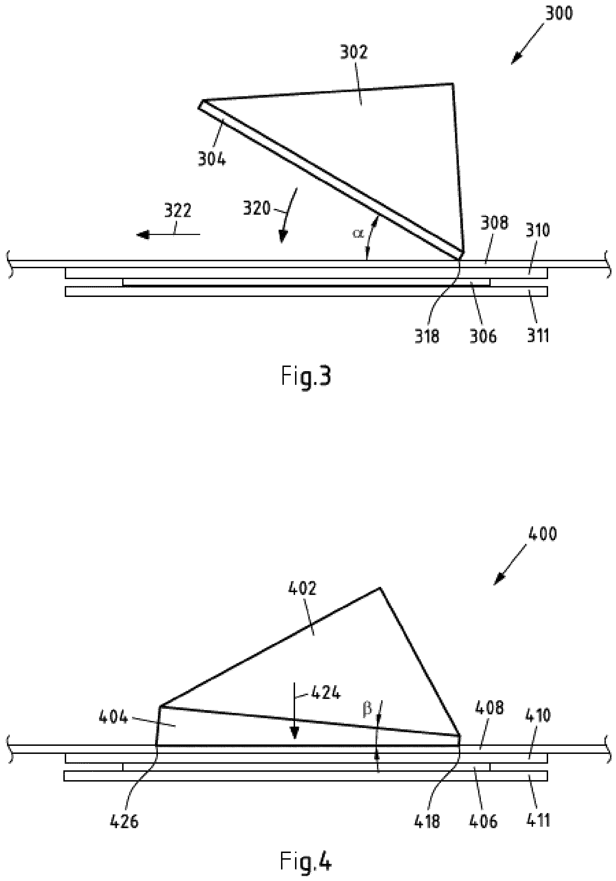

Die Figur 3 zeigt eine schematische Ansicht eines weiteren Ausführungsbeispiels einer Vorrichtung 300 gemäß der vorliegenden Erfindung. Insbesondere dient die Figur 3 dazu, eine bevorzugte Ausführungsform des Kopplungsschritts zu verdeutlichen. In dem Kopplungsschritt wird durch das mechanische Verfahren des Einkopplungselements der optische Kontakt zwischen dem Kopplungsabschnitt des Einkopplungselements und dem holographischen Aufzeichnungsmedium hergestellt. So zeigt die Figur 3 die Vorrichtung 300 zu einem bestimmten Zeitpunkt des Kopplungsschritts. Insbesondere wird die Vorrichtung 300 in einer Zwischenstellung des Kopplungsschritts dargestellt.

Wie in der Figur 3 zu erkennen ist, ist das Einkopplungselement 302 in der Zwischenstellung mit einer Kante 318 auf dem holographischen Aufzeichnungsmedium 308 angelegt. Insbesondere kann das Einkopplungselement 302 derart mechanisch verfahren werden, dass (nur) eine Kante 318 des Kopplungsabschnitts 304 das holographische Aufzeichnungsmedium 308 (bündig) kontaktiert. Beispielsweise können (nicht gezeigte) Mittel, wie ein Handhabungselement, mit dem Einkopplungselement 302 mechanisch gekoppelt sein, um das Einkopplungselement 302 zu verfahren bzw. zu bewegen. Zum Beispiel kann hierfür ein Roboterarm vorgesehen sein.

Nachdem das holographische Aufzeichnungsmedium 308 auf dem Trägerelement 310 bereitgestellt ist, kann das Einkopplungselement 302 beispielsweise mittels des Handhabungselements und einer Steuerung von einer Ausgangsstellung in die Zwischenstellung bewegt werden. Beispielsweise kann das Einkopplungselement 302 derart mechanisch verfahren werden, dass in der Zwischenstellung eine Kante 318 des Einkopplungselements 302, insbesondere der Kopplungsabschnitt 304, an das holographische Aufzeichnungsmedium 308 angelegt wird.

Dann kann das Einkopplungselement 302 von der Zwischenstellung in eine Kopplungsstellung bewegt werden. Beispielsweise kann das Einkopplungselement 302 in einer Kippbewegung (entsprechend dem Pfeil 320) auf das holographische Aufzeichnungsmedium 308 aufgesetzt werden, um insbesondere eine optische Kopplung zwischen dem Einkopplungselement 302, vorzugsweise der gesamten Flachseite des Kopplungsabschnitts 304, und dem holographischen Aufzeichnungsmedium 308 zu erreichen. Mit anderen Worten kann der Winkel $\alpha$ vorzugsweise kontinuierlich bis auf ca. 0° verringert werden. Beispielsweise kann ein Roboterarm mit dem Einkopplungselement 302 (mechanisch) verbunden sein, um das Einkopplungselement 302 entsprechend zu verfahren. Der Vorteil des vorliegenden Kopplungsprozesses besteht insbesondere darin, dass die Luft in Richtung 322 entweichen kann. Ein besonders guter und blasenfreier optischer Kontakt kann erzielt werden.

Es versteht sich, dass das Einkopplungselement 302 vorzugsweise kontinuierlich von einer Ausgangsstellung in eine Kopplungsstellung bewegt wird.

Die Figur 4 zeigt eine weitere schematische Ansicht eines weiteren Ausführungsbeispiels einer Vorrichtung 400 gemäß der vorliegenden Erfindung. Insbesondere dient die Figur 4 dazu, eine bevorzugte Ausführungsform des Kopplungsschritts zu verdeutlichen. So zeigt die Figur 4 die Vorrichtung 400 zu einem bestimmten Zeitpunkt des Kopplungsschritts. Insbesondere zeigt die Figur 4 die Vorrichtung zu einem Zeitpunkt, bei dem bereits der optische Kontakt zwischen dem Einkopplungselement 402, insbesondere einer Flachseite des Kopplungsabschnitts 404, und dem holographischen Aufzeichnungsmedium 408 hergestellt ist. Mit anderen Worten befindet sich das Einkopplungselement 402 in einer Kopplungsstellung.

Auch bei dieser Kopplungsschrittoption kann das Einkopplungselement 402 zunächst in eine Zwischenstellung verfahren werden. In der Zwischenstellung kann das Einkopplungselement 402 mit (nur) einer Kante 418 an das holographische Aufzeichnungsmedium 408 angelegt werden. Insbesondere kann das Einkopplungselement 402 zunächst derart verfahren werden, dass eine Kante 418 des Kopplungsabschnitts 404 das Aufzeichnungsmedium 408 (bündig) kontaktiert. Insbesondere wird eine Kante 418 des Einkopplungselements 402 mit einem Winkel $\beta$ an das holographische Aufzeichnungsmedium 408 angelegt.

Der Winkel $\beta$ erfüllt hierbei folgende Bedingung:

$$\beta < \arctan(d/l), \tag{1}$$

wobei d die Schichtdicke des Kopplungsabschnitts 404 in einem nicht komprimierten Zustand und l die Länge des Kopplungsabschnitts 404, insbesondere die Länge zwischen der ersten Kante 418 und der weiteren Kante 426, ist.

Wie nachfolgend beschrieben wird, ermöglicht ein Aufsetzen des Einkopplungselements 402 mit einem entsprechenden Winkel $\beta$ das Herstellen eines optischen Kontakts über die gesamte Flachseite des Kopplungsabschnitts 404. Nachdem das Einkopplungselement 402 unter einem Winkel $\beta$ an einer ersten Kante 418 aufgesetzt worden ist (Zwischenstellung), kann das Einkopplungselement 402 in einer (kontinuierlichen) translatorischen Bewegung in einer Richtung (siehe Pfeil 424), die normal zur Fläche eines (planaren) holographischen Aufzeichnungsmediums 408 verläuft, verfahren werden, bis ein ausreichender optischer Kontakt zwischen dem Einkopplungselement 402 bzw. dem Kopplungsabschnitt 404, und dem holographischen Aufzeichnungsmedium 408 erreicht ist (Kopplungsstellung). Ein ausreichender optischer Kontakt ist insbesondere dann erreicht, wenn auch die Kante 426 des Kopplungsabschnitts 404, die der ersten Kante 418 gegenüberliegt, einen optischen Kontakt mit dem holographischen Aufzeichnungsmedium 408 hat.

Im Ergebnis wird vorliegend der weiche Kopplungsabschnitt 404 zunächst an einer Seite 418 kontaktiert und komprimiert. Die durch zunehmende Kompression entstehende, wachsende Kopplungsfläche ermöglicht es dabei, Lufteinschlüsse zu vermeiden. Zudem werden Unebenheiten auf und zwischen der Flachseite des Kopplungsabschnitts 404 und dem Trägerelement 410 umfassend das holographische Aufzeichnungsmedium 408 ausgeglichen. Wie der Figur 4 zu entnehmen ist, ist im gekoppelten Zustand der Kopplungsabschnitt 404 an einer Seite 418 der Koppelfläche nahezu völlig komprimiert, während es an der anderen Seite 426 eine geringe Kompression erfährt.

Es versteht sich, dass das Einkopplungselement 402 vorzugsweise kontinuierlich von einer Ausgangsstellung in eine Kopplungsstellung bewegt wird.

In einer weiteren Ausführungsform des Kopplungsschritts kann der Kopplungsabschnitt des Einkopplungselements planparallel zum holographischen Aufzeichnungsmedium ausgerichtet und angenähert werden.

Die Funktionsweise eines bevorzugten Ausführungsbeispiels einer erfindungsgemäßen Vorrichtung wird nachfolgend mittels der Figur 5 beschrieben. Die Figur 5 zeigt insbesondere ein Ablaufdiagramm eines Ausführungsbeispiels eines Verfahrens gemäß der vorliegenden Erfindung.

In einem ersten Schritt 501 kann auf der weiteren Flachseite eines Trägerelements ein holographisches Aufzeichnungsmedium bereitgestellt werden. Vorzugsweise kann ein noch nicht beschriebenes holographisches Aufzeichnungsmedium über eine Fördereinrichtung bereitgestellt werden. Das Trägerelement weist hierbei an der ersten Flachseite ein Masterelement auf.

In einem nächsten Schritt 502, der auch als Kopplungsschritt 502 bezeichnet werden kann, wird das Einkopplungselement optisch mit dem holographischen Aufzeichnungsmedium gekoppelt. Beispielsweise kann dies entsprechend den Ausführungen zu der Figur 3 oder 4 erfolgen, auf die an dieser Stelle verwiesen wird.

In dem nächsten Schritt 503 wird dann mindestens eine Lichtquelle, insbesondere ein Laser, aktiviert und das Einkopplungselement bzw. das holographische Aufzeichnungsmedium belichtet. Optional kann vor der Belichtung und nach der Kopplung in Schritt 502 eine vorgebbare Wartezeit liegen. Die Belichtung kann statisch oder mit scannendem Laserstrahl erfolgen. Die Belichtung kann mit Dauerstrichlaser (CW) oder mit gepulstem Kurzzeitlaser erfolgen. Die Belichtung kann (je nach Aufgabenstellung) mit einem oder mehreren Laserstrahlen unterschiedlicher Wellenformen, unterschiedlicher Wellenlängen und unterschiedlicher Intensitätsverteilungen erfolgen.

Wie zuvor beschrieben wurde, wird durch die gebeugte Reflexion der Laserstrahlen am bzw. durch das Masterelement eine Interferenz innerhalb des holographischen Aufzeichnungsmediums bewirkt und so das gewünschte Hologramm geschrieben.

Nach der Belichtung wird in einem nächsten Schritt 504 das Einkopplungselement von dem beschriebenen holographischen Aufzeichnungsmedium entkoppelt. Insbesondere kann durch geeignete Mittel, wie einem Handhabungselement und einer zugehörigen Steuerung, das Einkopplungselement entsprechend verfahren werden. Eine Entkopplung ist aufgrund der erfindungsgemäßen Ausgestaltung von zumindest dem Kopplungsabschnitt des Einkopplungselements in einfacher Weise möglich. Ein erneutes Koppeln und Entkoppeln kann in einem kontinuierlich oder quasi-kontinuierlich ausgestalteten Verfahren unmittelbar im Anschluss erfolgen.

In einem nächsten Schritt 505 kann das beschriebene holographische Aufzeichnungsmedium insbesondere durch eine Fördereinrichtung und einer zugehörigen Steuerung von dem Trägerelement gelöst (delaminiert) und weitertransportiert werden und vorzugsweise gleichzeitig ein unbeschriebenes holographisches Aufzeichnungsmedium auf der weiteren Flachseite des Trägerelements bereitgestellt werden. Dann kann mit Schritt 502 fortgefahren werden.

Figur 6 zeigt eine schematische Ansicht eines weiteren Ausführungsbeispiels einer Vorrichtung 600 gemäß der vorliegenden Erfindung. Nachfolgend werden zur Vermeidung von Wiederholungen im Wesentlichen die Unterschiede des Ausführungsbeispiels gemäß Figur 6 zum Ausführungsbeispiel insbesondere gemäß der Figur 2 erläutert.

Bei dem vorliegenden Ausführungsbeispiel wird das holographische Aufzeichnungsmedium 608 auf der Flachseite 605 des optischen Einkopplungselements 602 bereitgestellt, insbesondere auflaminiert. Insbesondere ist vorliegend kein Kopplungsabschnitt zwischen holographischem Aufzeichnungsmedium 608 und optischem Einkopplungselement 602 vorgesehen. In der dargestellten bevorzugten Variante kann eine Fördereinrichtung 612 umfassend ein oder mehrere Umrollelement/e 612 vorgesehen sein, um das holographische Aufzeichnungsmedium 608 beispielsweise in Form eines Films zu transportieren und auf dem Einkopplungselement zu positionieren. Dies erlaubt insbesondere eine industrielle Fertigung von Volumenreflexionshologrammen. Optional kann eine (nicht gezeigte) Laminations-/Delaminationseinheit vorgesehen sein, um das holographische Aufzeichnungsmedium 608 auf die Flachseite 605 des optischen Einkopplungselements 602 aufzulaminieren.

Wie der Figur 6 ferner entnommen werden kann, ist der Kopplungsabschnitt 604 vorliegend auf einer Flachseite des Trägerelements 610 angeordnet. Die Komponenten 604 und 610 können als separate Elemente gebildet sein. Beispielsweise kann das Trägerelement 610 mit einem Kopplungsabschnitt 604 in Form einer zuvor beschriebenen Beschichtung versehen sein. Der separate Kopplungsabschnitt 604 kann auch eine Platte oder ein Film sein. Auch kann vorgesehen sein, dass die Komponenten 604 und 610 homogen aus einem Material hergestellt sind. In jedem Fall ist zumindest der Kopplungsabschnitt 604 aus einem Material mit einem Schubmodul zwischen 1000 Pa und 50 MPa, vorzugsweise zwischen 30000 Pa und 30 MPa, gebildet.

Über ein (nicht gezeigtes) Handhabungselement kann vorzugsweise das Trägerelement 610, insbesondere das Schichtsystem umfassend Kopplungsabschnitt 604, Trägerelement 610, Masterelement 606 und einem optionalen weiteren Trägerelement 611 verfahren werden. Insbesondere kann zur Herstellung der optischen Kopplung zwischen dem auf dem Einkopplungselement 602 bereitgestellten holographischen Aufzeichnungsmedium 608 und dem Trägerelement 610, das Trägerelement 610, insbesondere das Schichtsystem, in Richtung 615 verfahren werden. Es versteht sich, dass alternativ das Schichtsystem entsprechend den Ausführungen zu den Ausführungsbeispielen gemäß Figur 3 und 4 verfahren werden kann. Nach einer Beschreibung des holographischen Aufzeichnungsmediums 606 kann das Schichtsystem in entgegengesetzter Richtung 615 verfahren werden.

**Patentansprüche**

1. Vorrichtung (200, 300, 400, 600) zum Herstellen von Volumenreflexionshologrammen mit substratgeführten Rekonstruktionsstrahlen, umfassend:

   - mindestens ein transparentes, flächiges Trägerelement (210, 310, 410, 610) mit einer ersten Flachseite (210.1) und einer weiteren Flachseite (210.2),
   - mindestens ein an der ersten Flachseite (210.1) des Trägerelements (210, 310, 410, 610) anordnenbares Masterelement (206, 306, 406, 606), und
   - mindestens ein optisches Einkopplungselement (102, 202, 302, 402, 602) eingerichtet zum optischen Einkoppeln eines Lichtstrahls (214, 216),
   - mindestens ein Kopplungsabschnitt (104, 204, 304, 404, 604) eingerichtet zum mechanischen Herstellen eines optischen Kontakts zwischen dem Einkopplungselement (102, 202, 302, 402,) und mindestens einem auf der weiteren Flachseite (210.2) des Trägerelements (210, 310, 410) bereitstellbaren holographischen Aufzeichnungsmedium (208, 308, 408) oder eingerichtet zum mechanischen Herstellen eines optischen Kontakts zwischen der weiteren Flachseite des Trägerelements (610) und mindestens einem auf einer Flachseite (605) des optischen Einkopplungselement (602) bereitstellbaren holographischen Aufzeichnungsmedium (608), **dadurch gekennzeichnet, dass**
   - zumindest der Kopplungsabschnitt (104, 204, 304, 404, 604) aus einem Material mit einem Schubmodul zwischen 1000 Pa und 50 MPa, vorzugsweise zwischen 30000 Pa und 30 MPa, gebildet ist.

2. Vorrichtung (200, 300, 400, 600) nach Anspruch 1, **dadurch gekennzeichnet, dass**

   - das Einkopplungselement (102, 202, 302, 402) und der Kopplungsabschnitt (104, 204, 304, 404) oder der Kopplungsabschnitt (604) und das Trägerelement (610) homogen aus einem Material mit einem Schubmodul zwischen 1000 Pa und 50 MPa, vorzugsweise zwischen 30000 Pa und 30 MPa, gebildet sind, oder
   - das Einkopplungselement (102, 202, 302, 402) oder das Trägerelement (610) als Kopplungsabschnitt (104, 204, 304, 404, 604) eine Beschichtung aus einem Material mit einem Schubmodul zwischen 1000 Pa und 50 MPa, vorzugsweise zwischen 30000 Pa und 30 MPa, aufweist, oder
   - das Einkopplungselement (102, 202, 302, 402) und der Kopplungsabschnitt (104, 204, 304, 404) oder das Trägerelement (610) und der Kopplungsabschnitt (604) als separate Elemente gebildet sind, wobei der Kopplungsabschnitt (104, 204, 304, 404, 604) insbesondere als transportabler Film aus einem Material mit einem Schubmodul zwischen 1000 Pa und 50 MPa, vorzugsweise zwischen 30000 Pa und 30 MPa, gebildet ist.

3. Vorrichtung (200, 300, 400, 600) nach Anspruch 1 oder 2, **dadurch gekennzeichnet, dass**

   - mindestens ein mit dem Einkopplungselement (102, 202, 302, 402) zumindest mechanisch verbindbares Handhabungselement eingerichtet zum Bewegen des Einkopplungselements (102, 202, 302, 402) vorgesehen ist, oder
   - mindestens ein mit dem Trägerelement (610) zumindest mechanisch verbindbares Handhabungselement eingerichtet zum Bewegen des Trägerelements (610) vorgesehen ist.

4. Vorrichtung (200, 300, 400, 600) nach Anspruch 3, **dadurch gekennzeichnet, dass**

   - mindestens eine Steuerung zum Steuern des Handhabungselements vorgesehen ist,
   - wobei die Steuerung eingerichtet ist, das Handhabungselement derart anzusteuern, dass in einem Kopplungsschritt das Einkopplungselement (102, 202, 302, 402) oder das Trägerelement (610) von einer Ausgangsstellung in eine Kopplungsstellung bewegt wird, und/oder
   - wobei die Steuerung eingerichtet ist, das Handhabungselement derart anzusteuern, dass in einem Entkopplungsschritt das Einkopplungselement (102, 202, 302, 402) oder das Trägerelement (610) von der Kopplungsstellung in die Ausgangsstellung bewegt wird.

5. Vorrichtung (200, 300, 400, 600) nach Anspruch 4, **dadurch gekennzeichnet, dass**

   - die Steuerung eingerichtet ist, das Handhabungselement derart anzusteuern, dass in einem ersten Teilschritt des Kopplungsschritts das Einkopplungselement (102, 202, 302, 402) oder das Trägerelement (610) von der Ausgangsstellung in eine Zwischenstellung bewegt wird,
   - wobei in der Zwischenstellung zumindest eine Kante (318, 418) des Kopplungsabschnitts (104, 204, 304, 404, 604) das holographische Aufzeichnungsmedium (208, 308, 408, 608) kontaktiert.

6. Vorrichtung (200, 300, 400, 600) nach Anspruch 5, **dadurch gekennzeichnet, dass**

- die Steuerung eingerichtet ist, das Handhabungselement derart anzusteuern, dass in einem weiteren Teilschritt des Kopplungsschritts das Einkopplungselement (102, 202, 302, 402) oder das Trägerelement (610) von der Zwischenstellung durch eine Kippbewegung in die Kopplungsstellung bewegt wird, oder
- die Steuerung eingerichtet ist, das Handhabungselement derart anzusteuern, dass in einem weiteren Teilschritt des Kopplungsschritts das Einkopplungselement (102, 202, 302, 402) oder das Trägerelement (610) von der Zwischenstellung durch eine translatorische Bewegung in die Kopplungsstellung bewegt wird.

7. Vorrichtung (200, 300, 400, 600) nach Anspruch 5, **dadurch gekennzeichnet, dass**

- die Steuerung eingerichtet ist, das Handhabungselement derart anzusteuern, dass in einem weiteren Teilschritt des Kopplungsschritts das Einkopplungselement (102, 202, 302, 402) oder das Trägerelement (610) von der Zwischenstellung durch eine translatorische Bewegung in die Kopplungsstellung bewegt wird,
- in der Zwischenstellung zwischen einer Flachseite des Kopplungsabschnitts (104, 204, 304, 404, 604) und einer Flachseite des holographischen Aufzeichnungsmediums (208, 308, 408, 608) ein Winkel $\beta$ liegt,
- wobei der Winkel $\beta$ die Bedingung $\beta < \arctan(d/1)$ erfüllt, und
- wobei d die Schichtdicke des Kopplungsabschnitts (104, 204, 304, 404, 604) in einem nicht komprimierten Zustand und l die Länge des Kopplungsabschnitts (104, 204, 304, 404, 604) ist.

8. Vorrichtung (200, 300, 400, 600) nach einem der vorherigen Ansprüche, **dadurch gekennzeichnet, dass** das Masterelement (206, 306, 406, 606) eingerichtet ist, einen auftreffenden Lichtstrahl (214, 216) zumindest teilweise reflektiv zu beugen.

9. Vorrichtung (200, 300, 400, 600) nach einem der vorherigen Ansprüche, **dadurch gekennzeichnet, dass** das holographische Aufzeichnungsmedium (208, 308, 408, 608) ein thermoplastisches Substrat und eine holografische Aufzeichnungsschicht mit einem Schubmodul < 30 MPa umfasst, wobei das holographische Aufzeichnungsmedium (208, 308, 408, 608) aus einem Material gebildet ist ausgewählt aus der Gruppe umfassend photoresistive Materialien, Photopolymere, Silberhalogenidfilm, Dichromatgelatine, photochrome Materialien oder photorefraktive Materialien.

10. Vorrichtung (200, 300, 400, 600) nach einem der vorherigen Ansprüche, **dadurch gekennzeichnet, dass** eine Fördereinrichtung (212, 612) eingerichtet zum Transportieren des holographischen Aufzeichnungsmediums (208, 308, 408, 608) vorgesehen ist.

11. Vorrichtung (200, 300, 400, 600) nach einem der vorherigen Ansprüche, **dadurch gekennzeichnet, dass** zumindest der Kopplungsabschnitt (104, 204, 304, 404, 604) aus einem Material gebildet ist ausgewählt aus der Gruppe umfassend Polyurethan, Silikon, Kautschuk, Polyvinylbutyral, Polyvinylacetat, Polyvinylchlorid, Polyacrylat und/oder Epoxyharz.

12. Vorrichtung (200, 300, 400, 600) nach einem der vorherigen Ansprüche, **dadurch gekennzeichnet, dass**

- mindestens eine Laserquelle vorgesehen ist, und
- wobei die Laserquelle eingerichtet ist, das holographische Aufzeichnungsmedium (208, 308, 408, 608) statisch oder mit einem scannenden Laserstrahl zu belichten.

13. Verfahren zum Herstellen von Volumenreflexionshologrammen mit substratgeführten Rekonstruktionsstrahlen, umfassend:

- Bereitstellen von mindestens einem transparenten, flächigen Trägerelement (210, 310, 410, 610) mit einer ersten Flachseite (210.1) und einer weiteren Flachseite (210.2), wobei an der ersten Flachseite (210.1) des Trägerelements (210, 310, 410, 610) ein Masterelement (206, 306, 406, 606) angeordnet wird,
- Bereitstellen von mindestens einem optischen Einkopplungselement (102, 202, 302, 402, 602) mit einer Flachseite (605),
- Bereitstellen von einem holographischen Aufzeichnungsmedium (208, 308, 408, 608) auf der weiteren Flachseite (210.2) des Trägerelements (210, 310, 410) oder der Flachseite (605) des optischen Einkopplungselements (602),
- optisches Koppeln des holographischen Aufzeichnungsmediums (208, 308, 408, 608) mit einer Flachseite eines Kopplungsabschnitts (104, 204, 304, 404,604) in einem Kopplungsschritt derart, dass ein Lichtstrahl (214, 216) über das Einkopplungselement (102, 202, 302, 402, 602) in das holographische Aufzeichnungsmedium (208, 308, 408, 608) eingekoppelt und von dem Masterelement (206, 306, 406, 606) reflektiert wird,
- **dadurch gekennzeichnet, dass** zumindest der Kopplungsabschnitt (104, 204, 304, 404, 604) aus einem Material mit einem Schubmodul zwischen 1000 Pa und 50 MPa, vorzugsweise zwischen 30000 Pa und 30 MPa, gebildet ist.

14. Einkopplungselement (102, 202, 302, 402) eingerichtet zum optischen Einkoppeln eines Lichtstrahls (214, 216) für eine Vorrichtung (200, 300, 400) zum Herstellen von Volumenreflexionshologrammen mit substratgeführten Rekonstruktionsstrahlen nach einem der Ansprüche 1 bis 12,

- wobei das Einkopplungselement (102, 202, 302, 402) mindestens einen Kopplungsabschnitt (104, 204, 304, 404) eingerichtet zum Herstellen eines optischen Kontakts mit mindestens einem auf einer weiteren Flachseite (210.2) eines Trägerelements (210, 310, 410) bereitstellbaren holographischen Aufzeichnungsmedium (208, 308, 408) umfasst,
- **dadurch gekennzeichnet, dass** zumindest der Kopplungsabschnitts (104, 204, 304, 404) aus einem Material mit einem Schubmodul zwischen 1000 Pa und 50 MPa, vorzugsweise zwischen 30000 Pa und 30 MPa, gebildet ist.

**Claims**

1. Apparatus (200, 300, 400, 600) for producing volume reflection holograms with substrate-guided reconstruction beams, comprising:

- at least one transparent, planar carrier element (210, 310, 410, 610) with a first flat side (210.1) and a further flat side (210.2),
- at least one master element (206, 306, 406, 606) arrangeable on the first flat side (210.1) of the carrier element (210, 310, 410, 610) and
- at least one optical input coupling element (102, 202, 302, 402, 602) designed for optically coupling in a light beam (214, 216),
- at least one coupling portion (104, 204, 304, 404, 604) designed for mechanically establishing an optical contact between the input coupling element (102, 202, 302, 402) and at least one holographic recording medium (208, 308, 408) providable on the further flat side (210.2) of the carrier element (210, 310, 410) or designed for mechanically establishing an optical contact between the further flat side of the carrier element (610) and at least one holographic recording medium (608) providable on a flat side (605) of the optical input coupling element (602),
**characterized in that**
- at least the coupling portion (104, 204, 304, 404, 604) is formed from a material with a shear modulus of between 1000 Pa and 50 MPa, preferably of between 30000 Pa and 30 MPa.

2. Apparatus (200, 300, 400, 600) according to Claim 1, **characterized in that**

- the input coupling element (102, 202, 302, 402) and the coupling portion (104, 204, 304, 404) or the coupling portion (604) and the carrier element (610) are homogeneously formed from a material with a shear modulus of between 1000 Pa and 50 MPa, preferably of between 30000 Pa and 30 MPa, or
- the input coupling element (102, 202, 302, 402) or the carrier element (610), as a coupling portion (104, 204, 304, 404, 604), has a coating of a material with a shear modulus of between 1000 Pa and 50 MPa, preferably of between 30000 Pa and 30 MPa, or
- the input coupling element (102, 202, 302, 402) and the coupling portion (104, 204, 304, 404) or the carrier element (610) and the coupling portion (604) are formed as separate elements, wherein the coupling portion (104, 204, 304, 404, 604) is formed in particular as a transportable film from a material with a shear modulus of between 1000 Pa and 50 MPa, preferably of between 30000 Pa and 30 MPa.

3. Apparatus (200, 300, 400, 600) according to Claim 1 or 2, **characterized in that**

- at least one handling element which is at least mechanically connectable to the input coupling element (102, 202, 302, 402) and is designed for moving the input coupling element (102, 202, 302, 402) is provided or
- at least one handling element which is at least mechanically connectable to the carrier element (610) and is designed for moving the carrier element (610) is provided.

4. Apparatus (200, 300, 400, 600) according to Claim 3, **characterized in that**

- at least one controller for controlling the handling element is provided,
- wherein the controller is designed to actuate the handling element in such a way that, in a coupling step, the input coupling element (102, 202, 302, 402) or the carrier element (610) is moved from an initial position into a coupling position and/or
- wherein the controller is designed to actuate the handling element in such a way that, in a decoupling step, the input coupling element (102, 202, 302, 402) or the carrier element (610) is moved from the coupling position into the initial position.

5. Apparatus (200, 300, 400, 600) according to Claim 4, **characterized in that**

- the controller is designed to actuate the handling element in such a way that, in a first partial step of the coupling step, the input coupling element (102, 202, 302, 402) or the carrier element (610) is moved from the initial position into an intermediate position,
- wherein, in the intermediate position, at least one edge (318, 418) of the coupling portion (104, 204, 304, 404, 604) contacts the holographic recording medium (208, 308, 408, 608).

6. Apparatus (200, 300, 400, 600) according to Claim 5, **characterized in that**

- the controller is designed to actuate the handling element in such a way that, in a further partial step of the coupling step, the input coupling element (102, 202, 302, 402) or the carrier element (610) is moved from the intermediate position into the coupling position by way of a tilting movement or
- the controller is designed to actuate the handling element in such a way that, in a further partial step of the coupling step, the input coupling element (102, 202, 302, 402) or the carrier element (610) is moved from the intermediate position into the coupling position by way of a translational movement.

7. Apparatus (200, 300, 400, 600) according to Claim 5, **characterized in that**

- the controller is designed to actuate the handling element in such a way that, in a further partial step of the coupling step, the input coupling element (102, 202, 302, 402) or the carrier element (610) is moved from the intermediate position into the coupling position by way of a translational movement,
- in the intermediate position, there is an angle $\beta$ between a flat side of the coupling portion (104, 204, 304, 404, 604) and a flat side of the holographic recording medium (208, 308, 408, 608),
- wherein the angle $\beta$ satisfies the condition $\beta < \arctan (d/l)$, and
- wherein d is the layer thickness of the coupling portion (104, 204, 304, 404, 604) in an uncompressed state and l is the length of the coupling portion (104, 204, 304, 404, 604) .

8. Apparatus (200, 300, 400, 600) according to one of the preceding claims, **characterized in that** the master element (206, 306, 406, 606) is designed to diffract an incident light beam (214, 216) in an at least partly reflective manner.

9. Apparatus (200, 300, 400, 600) according to one of the preceding claims, **characterized in that** the holographic recording medium (208, 308, 408, 608) comprises a thermoplastic substrate and a holographic recording layer with a shear modulus < 30 MPa, wherein the holographic recording medium (208, 308, 408, 608) is formed from a material selected from the group comprising photoresistive materials, photopolymers, silver halide film, dichromated gelatine, photochromic materials or photorefractive materials.

10. Apparatus (200, 300, 400, 600) according to one of the preceding claims, **characterized in that** a conveying device (212, 612) designed for transporting the holographic recording medium (208, 308, 408, 608) is provided.

11. Apparatus (200, 300, 400, 600) according to one of the preceding claims, **characterized in that** at least the coupling portion (104, 204, 304, 404, 604) is formed from a material selected from the group comprising polyurethane, silicone, natural rubber, polyvinyl butyral, polyvinyl acetate, polyvinyl chloride, polyacrylate and/or epoxy resin.

**12.** Apparatus (200, 300, 400, 600) according to one of the preceding claims, **characterized in that**

- at least one laser source is provided, and
- wherein the laser source is designed to expose the holographic recording medium (208, 308, 408, 608) in a static manner or with a scanning laser beam.

**13.** Method for producing volume reflection holograms with substrate-guided reconstruction beams, comprising:

- providing at least one transparent, planar carrier element (210, 310, 410, 610) with a first flat side (210.1) and a further flat side (210.2), wherein a master element (206, 306, 406, 606) is arranged on the first flat side (210.1) of the carrier element (210, 310, 410, 610),
- providing at least one optical input coupling element (102, 202, 302, 402, 602) with a flat side (605),
- providing a holographic recording medium (208, 308, 408, 608) on the further flat side (210.2) of the carrier element (210, 310, 410) or the flat side (605) of the optical input coupling element (602),
- optically coupling the holographic recording medium (208, 308, 408, 608) with a flat side of a coupling portion (104, 204, 304, 404, 604) in a coupling step in such a way that a light beam (214, 216) is coupled into the holographic recording medium (208, 308, 408, 608) by way of the input coupling element (102, 202, 302, 402, 602) and reflected by the master element (206, 306, 406, 606),
- **characterized in that** at least the coupling portion (104, 204, 304, 404, 604) is formed from a material with a shear modulus of between 1000 Pa and 50 MPa, preferably of between 30000 Pa and 30 MPa.

**14.** Input coupling element (102, 202, 302, 402) designed for optically coupling in a light beam (214, 216) for an apparatus (200, 300, 400) for producing volume reflection holograms with substrate-guided reconstruction beams according to one of Claims 1 to 12,

- wherein the input coupling element (102, 202, 302, 402) comprises at least one coupling portion (104, 204, 304, 404) designed for establishing an optical contact with at least one holographic recording medium (208, 308, 408) providable on a further flat side (210.2) of a carrier element (210, 310, 410),
- **characterized in that** at least the coupling portion (104, 204, 304, 404) is formed from a material with a shear modulus of between 1000 Pa and 50 MPa, preferably of between 30000 Pa and 30 MPa.

**Revendications**

**1.** Dispositif (200, 300, 400, 600) destiné à la fabrication d'hologrammes de volume par réflexion à faisceaux de reconstruction guidés par substrat, comprenant :

- au moins un élément de support transparent et plat (210, 310, 410, 610) ayant une première face plate (210.1) et une autre face plate (210.2),
- au moins un élément maître (206, 306, 406, 606) pouvant être disposé sur la première face plate (210.1) de l'élément de support (210, 310, 410, 610), et
- au moins un élément d'injection optique (102, 202, 302, 402, 602) conçu pour injecter optiquement un faisceau lumineux (214, 216),
- au moins une partie de couplage (104, 204, 304, 404, 604) conçue pour établir un contact optique mécanique entre l'élément d'injection (102, 202, 302, 402) et au moins un support d'enregistrement holographique (208, 308, 408) pouvant être placé sur l'autre face plate (210.2) de l'élément de support (210, 310, 410), ou est conçue pour établir un contact optique mécanique entre l'autre face plate de l'élément de support (610) et au moins un support d'enregistrement holographique (608) pouvant être placé sur une face plate (605) de l'élément d'injection optique (602),
**caractérisé en ce que**
- la partie de couplage (104, 204, 304, 404, 604) est formée d'un matériau ayant un module de cisaillement compris entre 1000 Pa et 50 MPa, de préférence entre 30000 Pa et 30 MPa.

**2.** Dispositif (200, 300, 400, 600) selon la revendication 1, **caractérisé en ce que**

- l'élément d'injection optique (102, 202, 302, 402) et la partie de couplage (104, 204, 304, 404) ou la partie de couplage (604) et l'élément de support (610) sont formés de manière homogène à partir d'un matériau ayant un module de cisaillement compris entre 1000 Pa et 50 MPa, de préférence entre 30000 Pa et 30 MPa, ou

- l'élément d'injection optique (102, 202, 302, 402) ou l'élément de support (610) présente en tant que partie de couplage (104, 204, 304, 404, 604) un revêtement constitué d'un matériau ayant un module de cisaillement compris entre 1000 Pa et 50 MPa, de préférence entre 30000 Pa et 30 MPa, ou

- l'élément d'injection (102, 202, 302, 402) et la partie de couplage (104, 204, 304, 404) ou l'élément de support (610) et la partie de couplage (604) sont formés en tant qu'éléments séparés, la partie de couplage (104, 204, 304, 404, 604) étant notamment réalisée sous forme d'un film transportable constitué d'un matériau ayant un module de cisaillement compris entre 1000 Pa et 50 MPa, de préférence entre 30000 Pa et 30 MPa.

3. Dispositif (200, 300, 400, 600) selon la revendication 1 ou 2, **caractérisé en ce que**

- il est prévu au moins un élément de manipulation pouvant être relié au moins mécaniquement à l'élément d'injection (102, 202, 302, 402) et conçu pour déplacer l'élément d'optique (102, 202, 302, 402), ou

- il est prévu au moins un élément de manipulation pouvant être relié au moins mécaniquement à l'élément de support (610) et conçu pour déplacer l'élément de support (610).

4. Dispositif (200, 300, 400, 600) selon la revendication 3, **caractérisé en ce que**

- il est prévu au moins un dispositif de commande pour commander l'élément de manipulation,

- le dispositif de commande étant conçu pour commander l'élément de manipulation de manière à ce que, lors d'une étape de couplage, l'élément d'injection (102, 202, 302, 402) ou l'élément de support (610) soit déplacé d'une position initiale vers une position de couplage, et/ou

- le dispositif de commande étant conçu pour commander l'élément de manipulation de manière à ce que, lors d'une étape de découplage, l'élément d'injection (102, 202, 302, 402) ou l'élément de support (610) soit déplacé de la position de couplage vers la position initiale.

5. Dispositif (200, 300, 400, 600) selon la revendication 4, **caractérisé en ce que**

- le dispositif de commande est conçu pour commander l'élément de manipulation de manière à ce que, lors d'une première sous-étape de l'étape de couplage, l'élément d'injection (102, 202, 302, 402) ou l'élément de support (610) soit déplacé de la position initiale vers une position intermédiaire,

- à la position intermédiaire, au moins un bord (318, 418) de la partie de couplage (104, 204, 304, 404, 604) venant au contact du support d'enregistrement holographique (208, 308, 408, 608).

6. Dispositif (200, 300, 400, 600) selon la revendication 5, **caractérisé en ce que**

- le dispositif de commande est conçu pour commander l'élément de manipulation de manière à ce que, lors d'une autre sous-étape de l'étape de couplage, l'élément d'injection (102, 202, 302, 402) ou l'élément de support (610) soit déplacé de la position intermédiaire à la position de couplage par un mouvement de basculement, ou

- le dispositif de commande est conçu pour commander l'élément de manipulation de manière à ce que, lors d'une autre sous-étape de l'étape de couplage, l'élément d'injection (102, 202, 302, 402) ou l'élément de support (610) soit déplacé de la position intermédiaire à la position de couplage par un mouvement de translation.

7. Dispositif (200, 300, 400, 600) selon la revendication 5, **caractérisé en ce que**

- le dispositif de commande est conçu pour commander l'élément de manipulation de manière à ce que, lors d'une autre sous-étape de l'étape de couplage, l'élément d'injection (102, 202, 302, 402) ou l'élément de support (610) soit déplacé de la position intermédiaire à la position de couplage par un mouvement de translation,

- à la position intermédiaire, un angle $\beta$ est formé entre une face plate de la partie de couplage (104, 204, 304, 404, 604) et une face plate du support d'enregistrement holographique (208, 308, 408, 608),

- l'angle $\beta$ satisfaisant à la condition $\beta < \arctan(d/1)$, et

- d représentant l'épaisseur de couche de la partie de couplage (104, 204, 304, 404, 604) dans un état non comprimé et 1 représentant la longueur de la partie de couplage (104, 204, 304, 404, 604).

8. Dispositif (200, 300, 400, 600) selon l'une quelconque des revendications précédentes, **caractérisé en ce que** l'élément maître (206, 306, 406, 606) est conçu pour diffracter de manière partiellement réfléchissante un faisceau lumineux incident (214, 216).

9. Dispositif (200, 300, 400, 600) selon l'une quelconque des revendications précédentes, **caractérisé en ce que** le support d'enregistrement holographique (208, 308, 408, 608) comprend un substrat thermoplastique et une couche d'enregistrement holographique ayant un module de cisaillement < 30 MPa, le support d'enregistrement holographique (208, 308, 408, 608) étant constitué d'un matériau choisi parmi le groupe comprenant des matériaux photorésistants, des photopolymères, un film à l'halogénure d'argent, de la gélatine dichromatée, des matériaux photochromiques ou des matériaux photoréfractifs.

10. Dispositif (200, 300, 400, 600) selon l'une quelconque des revendications précédentes, **caractérisé en ce qu'**il est prévu un dispositif de transport (212, 612) destiné au transport du support d'enregistrement holographique (208, 308, 408, 608).

11. Dispositif (200, 300, 400, 600) selon l'une quelconque des revendications précédentes, **caractérisé en ce qu'**au moins la partie de couplage (104, 204, 304, 404, 604) est constituée d'un matériau choisi dans le groupe comprenant le polyuréthane, la silicone, le caoutchouc, le polyvinylbutyral, l'acétate de polyvinyle, le polychlorure de vinyle, le polyacrylate et/ou une résine époxy.

12. Dispositif (200, 300, 400, 600) selon l'une quelconque des revendications précédentes, **caractérisé en ce que**

- il est prévu au moins une source laser, et
- la source laser étant conçue pour exposer le support d'enregistrement holographique (208, 308, 408, 608) à un faisceau laser soit de manière statique, soit par balayage.

13. Procédé destiné à la fabrication d'hologrammes de volume par réflexion à faisceaux guidés par substrat, comprenant :

- la mise à disposition d'au moins un élément de support transparent et plat (210, 310, 410, 610) ayant une première face plate (210.1) et une autre face plate (210.2), un élément maître (206, 306, 406, 606) étant disposé sur la première face plate (210.1) de l'élément de support (210, 310, 410, 610),
- la mise à disposition d'au moins un élément d'injection optique (102, 202, 302, 402, 602) ayant une face plate (605),
- la mise à disposition d'un support d'enregistrement holographique (208, 308, 408, 608) sur l'autre face plate (210.2) de l'élément de support (210, 310, 410) ou sur la face plate (605) de l'élément d'injection optique (602),
- le couplage optique du support d'enregistrement holographique (208, 308, 408, 608) avec une face plate d'une partie de couplage (104, 204, 304, 404, 604) lors d'une étape de couplage de manière à ce qu'un faisceau lumineux (214, 216) soit injecté dans le support d'enregistrement holographique (208, 308, 408, 608) par l'intermédiaire de l'élément d'injection (102, 202, 302, 402, 602) et soit réfléchi par l'élément maître (206, 306, 406, 606),
- **caractérisé en ce que** la partie de couplage (104, 204, 304, 404, 604) est formée d'un matériau ayant un module de cisaillement compris entre 1000 Pa et 50 MPa, de préférence entre 30000 Pa et 30 MPa.

14. Élément d'injection (102, 202, 302, 402) conçu pour l'injection optique d'un faisceau lumineux (214, 216) pour un dispositif (200, 300, 400) destiné à la fabrication d'hologrammes de volume par réflexion à faisceaux guidés par substrat selon l'une quelconque des revendications 1 à 12,

- l'élément d'injection optique (102, 202, 302, 402) comprenant au moins une partie de couplage (104, 204, 304, 404) conçue pour établir un contact optique avec au moins un support d'enregistrement holographique (208, 308, 408) pouvant être placé sur une autre face plate (210.2) d'un élément de support (210, 310, 410),
- **caractérisé en ce qu'**au moins la partie de couplage (104, 204, 304, 404) est formée d'un matériau ayant un module de cisaillement compris entre 1000 Pa et 50 MPa, de préférence entre 30000 Pa et 30 MPa.

Fig.1

Fig.2

Fig.3

Fig.4

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110058240 A1
- US 2007024939 A
- WO 1994018603 A1
- US 4643515 A
- US 4790613 A
- US 5330264 A
- WO 2008100593 A
- EP 2317511 A1

**In der Beschreibung aufgeführte Nicht-Patentliteratur**

- **P. HARIHARAN**. Optical Holography. Cambridge University Press, 1996